# EUROPEAN PATENT APPLICATION

(11) **EP 4 491 971 A1**
(43) Date of publication of application: **15.01.2025**
(21) Application number: 24188117.6
(22) Date of filing: 11.07.2024
(51) Int. Cl.: F25B 25/00, F25B 49/02

(54) **BATTERY-POWERED AIR CONDITIONING SYSTEM**

(30) Priority: 11.07.2023 US 202363513021 P
(71) Applicant: Carrier Corporation, Palm Beach Gardens, FL 33418 (US)
(72) Inventor: JOARDAR, Arindom, Syracuse, 13221 (US)
(74) Representative: Dehns

(57) **Abstract**

An air conditioning system (100; 1200) includes a vapor compression cycle having a plurality of components including a compressor (242; 1006; 1210), an expansion device (1216, 1218; 1232), and at least one heat exchanger (1002, 1024, 1102, 1110; 1212, 1220, 1230). A heat transfer fluid is configured to circulate within the vapor compression cycle. An energy storage device (240; 1100) is selectively operable to supply power to one of the plurality of components. The energy storage device (240; 1100) is thermally coupled to the vapor compression cycle.

## Description

### CROSS-REFERENCE TO RELATED APPLICATIONS

This application claims the benefit of United States Application No. 63/513,021, filed July 11, 2023, the contents of which are incorporated by reference herein in their entirety.

### BACKGROUND

The embodiments described herein relate to air conditioning systems.

Electrical energy drives a myriad of devices and equipment in commercial, industrial, residential applications, and data centers. For example, electrical energy drives lights, motors, household appliances, medical equipment, computers, air conditioning systems, electric vehicle charging stations, data centers processing and cooling needs, and many other electrical devices. In most areas, power utilities generate and distribute electricity through an AC power grid. Shortages and/or increased costs associated with the use of fossil fuels, intermittency of renewable resources, power demand and supply variabilities, and increased demand of energy, among others factors, significantly impact the continuous availability and cost of electricity to consumers and businesses. In general, shortages and/or increased costs often occur during times of peak demand. Peak demand may occur based on time of day, such as in the morning or in the evening. On a more random basis, peak demand (or a demand greater than an available supply) may occur as a result of a natural disaster, or during extensive times of e.g., cloudiness, if the power from the grid comes from solar energy, or wind variability, if the power from the grid comes from wind turbines. For example, a hurricane or earthquake may damage the power grid and/or electric generators of the power utilities, thereby resulting in substantial loss of electric power to commercial, industrial, and residential applications. Repairs to these damaged lines and generators may take hours, days, or weeks. Various sites also may lose power from the power grid for other reasons, including maintenance. During these times of lost power, the sites may be unable to continue operations. Moreover, increasing numbers of data centers significantly add to the demand of energy from the grid.

Often, electrical energy from the power grid is more expensive during times of peak demand. For example, a power utility may employ low cost electrical generators during periods of minimum demand, while further employing high cost electrical generators during periods of peak demand. Unfortunately, the existing infrastructure does not adequately address these different costs associated with peak and minimum demands. As a result, commercial, industrial, data centers and residential applications typically draw power from the power grid during times of peak demand, despite the higher costs associated with its generation.

Some energy consumers, such as commercial, industrial, data centers, and residential users may be driven by factors other than cost, such as a desire to support sustainable energy options as further described below.

### SUMMARY

According to a first aspect of the invention, an air conditioning system includes a vapor compression cycle having a plurality of components including a compressor, an expansion device, and at least one heat exchanger. A heat transfer fluid is configured to circulate within the vapor compression cycle. An energy storage device is selectively operable to supply power to one of the plurality of components. The energy storage device is thermally coupled to the vapor compression cycle.

Optionally, the energy storage device is arranged directly within a flow path of the heat transfer fluid.

Optionally, the energy storage device includes a housing having at least one flow channel formed therein for receiving the heat transfer fluid.

Optionally, the energy storage device is indirectly thermally coupled to the vapor compression cycle.

Optionally, the at least one heat exchanger of the vapor compression cycle includes a first heat exchanger, a second heat exchanger, and an energy storage heat exchanger. The energy storage device is thermally coupled to the energy storage heat exchanger via a coolant loop.

Optionally, the energy storage heat exchanger is a thermal storage device including a phase change material.

Optionally, a coolant expansion device may be disposed downstream from one of the first heat exchanger and the second heat exchanger and upstream from the energy storage heat exchanger relative to a flow of the heat transfer fluid.

Optionally, a bypass conduit may be arranged in parallel with the coolant expansion device. The bypass conduit includes a valve operable to control the flow of the heat transfer fluid through the bypass conduit.

Optionally, the plurality of components of the vapor compression cycle are arranged within an indoor unit and an outdoor unit and the energy storage heat exchanger is arranged within the indoor unit.

Optionally, the plurality of components of the vapor compression cycle are arranged within an indoor unit and an outdoor unit and the energy storage heat exchanger is arranged within the outdoor unit.

Optionally, the air conditioning system may include a sensor for monitoring a temperature of the energy storage device, a pump arranged within the coolant loop, and a controller operably coupled to the sensor and to the pump. The controller is operable to initiate the pump in response to the temperature of the energy storage device.

According to a second aspect of the invention a method of operating an air conditioning system includes determining that a temperature of an energy storage device operable to supply power to the air conditioning system is beyond a threshold and managing the temperature of the energy storage device via a heat transfer fluid of the air conditioning system.

Optionally, managing the temperature of the energy storage device via the heat transfer fluid of the air conditioning system includes providing a flow of the heat transfer fluid directly to the energy storage device.

Optionally, managing the temperature of the energy storage device via the heat transfer fluid of the air conditioning system includes cooling the energy storage device when the temperature of the energy storage device exceeds the threshold.

Optionally, managing the temperature of the energy storage device via the heat transfer fluid of the air conditioning system includes transferring heat from a coolant at an energy storage heat exchanger of the air conditioning system. The coolant is fluidly coupled to the energy storage device.

Optionally, the energy storage heat exchanger includes a phase change material. Transferring heat from the coolant at the energy storage heat exchanger of the air conditioning system causes the phase change material to transform from a first phase to a second phase.

Optionally, the method may include determining that the temperature of the energy storage device is within the threshold and recharging the energy storage heat exchanger to transform the phase change material from the second phase to the first phase.

Optionally, recharging the energy storage heat exchanger includes providing a flow of the heat transfer fluid to the energy storage heat exchanger.

Optionally, managing the temperature of the energy storage device via the heat transfer fluid of the air conditioning system includes heating the energy storage device when the temperature of the energy storage device is below the threshold.

Optionally, managing the temperature of the energy storage device via the heat transfer fluid of the air conditioning system includes transferring heat to a coolant at an energy storage heat exchanger of the air conditioning system. The coolant is fluidly coupled to the energy storage device.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

FIG. 1 depicts an air conditioning system.
FIG. 2 depicts a controller.
FIG. 3A depicts an electrical architecture.
FIG. 3B depicts an electrical architecture.
FIG. 4A depicts an electrical architecture.
FIG. 4B depicts an electrical architecture.
FIG. 5A depicts an electrical architecture for a fixed speed compressor having a DC architecture.
FIG. 5B depicts an electrical architecture for a fixed speed compressor having an AC architecture.
FIG. 5C depicts an electrical architecture for a variable speed compressor having a DC architecture.
FIG. 5D depicts an electrical architecture for a variable speed compressor having an AC architecture.
FIG. 6 depicts an electrical architecture for a compressor powered by a multilevel inverter.
FIG. 7 depicts one phase leg of a five level, multiphase inverter.
FIG. 8 depicts communication between a controller, a thermostat and a remote system.
FIG. 9 depicts a control process .
FIG. 10A is a perspective view of an outdoor unit of an air conditioning system having an internal energy storage device.
FIG. 10B is a perspective view of an outdoor unit of an air conditioning system having a remotely located energy storage device.
FIG. 11 is a perspective view of an indoor unit of an air conditioning system having an internal energy storage device.
FIG. 12 is a schematic diagram of an outdoor unit configured to indirectly cool an energy storage device.
FIG. 13 is a schematic diagram of an indoor unit configured to indirectly cool an energy storage device.
FIG. 14 is a schematic diagram of an indoor unit configured to indirectly cool an energy storage device.
FIG. 15 is a schematic diagram of an indoor unit configured to indirectly cool an energy storage device.
FIG. 16 is a schematic diagram of an outdoor unit configured to indirectly cool an energy storage device.
FIG. 17 is a schematic diagram of an indoor unit configured to indirectly cool an energy storage device.
FIG. 18 is a schematic diagram of an outdoor unit configured to directly cool an energy storage device.
FIG. 19 is a schematic diagram of an outdoor unit configured to directly cool an energy storage device.
FIG. 20 is a schematic diagram of an outdoor unit configured to directly cool an energy storage device.
FIG. 21 is a schematic diagram of an outdoor unit configured to directly cool an energy storage device.
FIG. 22 is a schematic diagram of an outdoor unit configured to directly cool an energy storage device.

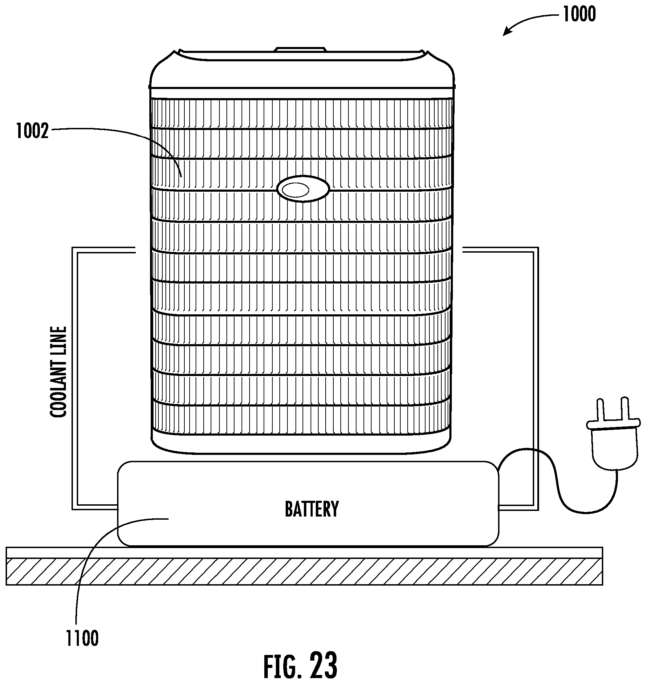

FIG. 23 is a schematic diagram of an outdoor unit configured to directly cool an energy storage device.
FIG. 24 is a schematic diagram of a vapor compression cycle of an air conditioning system operable to cool an energy storage device in a heating mode.
FIG. 25 is a schematic diagram of a vapor compression cycle of an air conditioning system operable to cool an energy storage device in a cooling mode.

### DETAILED DESCRIPTION

With current global electrification and decarbonization efforts, there are incentives to use efficient, optimized, all-electric air conditioning systems that provide comfort while being dispatchable (on-off, adjusted or variable) under different pricing conditions, or after receiving a utility signal. By way of example, the utility signal may be received from an electrical AC power grid, and may include an independent system operator (ISO), which may include an independent, federally regulated entity established to coordinate regional transmission in a non-discriminatory manner and ensure the safety and reliability of the electric system, or a regional transmission organization (RTO) which may operate bulk electric power systems across much of a geographic area and are generally independent, membership-based, non-profit organizations that ensure reliability and optimize supply and demand bids for wholesale electric power, or from a virtual power plant, generally considered to include a connected aggregation of distributed energy resource (DER) technologies providing integration of renewables and demand flexibility. Reference to a utility refers to one or more entities involved in the generation, transmission and/or distribution of electrical power.

Embodiments described herein relate to an air conditioning system that includes electrical energy storage systems (e.g., batteries, supercapacitors) to provide a level of dispatchability needed to interconnect with the electrical power grid.

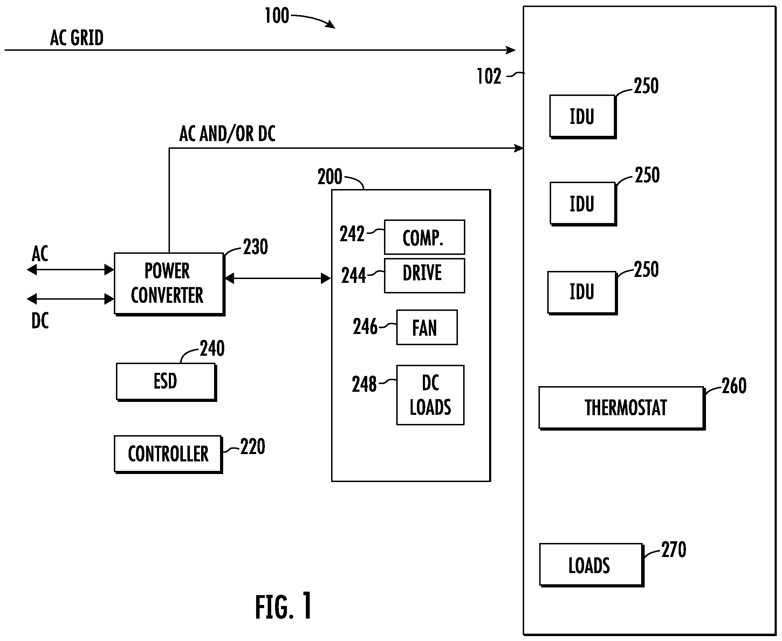

FIG. 1 depicts a system 100 in an example embodiment. The system 100 includes components of an air conditioning system. The phrase "air conditioning" is intended to include one or more of heating, cooling, ventilation, humidification, dehumidification, refrigeration, hot water heating, chilling water or fluid, air filtration, and other known air processing operations, or a combination of any of the above. The air conditioning system may include known types of systems such as heat pumps, geothermal heat pumps, chillers, split systems, packaged systems, all-in-one systems, etc. The air conditioning system 100 includes a first unit 200 and one or more second units 250. Depending on the nature of the air conditioning system, the first unit 200 and the second unit(s) 250 may be separately located (indoors or outdoors) or co-located (indoors or outdoors). For example, in a split system, the first unit 200 is an outdoor unit (e.g., compressor and heat exchanger) and the second unit(s) 250 are indoor units (e.g., expansion mechanisms, heat exchangers). In a packaged system (e.g., rooftop or ground), the first unit 200 and the second unit 250 are co-located in a single footprint outside a building. In a chiller, the first unit 200 and the second unit 250 may be co-located (both indoor or outdoor) or separately located. Certain all-in-one systems may have the first unit 200 and the second unit 250 co-located inside a building.

In the example shown in FIG. 1, the first unit 200 may be an outdoor unit of a split system located on ground level next to a building 102, on a rooftop of the building 102 or any other location. The second unit(s) 250 may be located inside the building 102, as is common with split systems. It is understood that FIG. 1 is one example, and embodiments are not limited to split systems.

The system 100 includes a controller 220, a power converter 230 and an energy storage device (ESD) 240. FIG. 1 is an example embodiment, and the location of components is not limited to that shown in FIG. 1. For example, the power converter 230, energy storage device 240 and controller 220 may be separate from the first unit 200, which houses the compressor 242, drive 244, fan 246 and load(s) 248. The first unit 200 may include a control unit (not shown) for controlling operation of the first unit 200. This allows components of the described embodiments to be retrofit to existing first units 200 of air conditioning systems and/or second units 250 of air conditioning systems. One or more of the power converter 230, energy storage device 240 and controller 220 may be located in the first unit 200. One or more of the power converter 230, energy storage device 240 and controller 220 may be located adjacent to or outside the first unit 200. One or more of the power converter 230, energy storage device 240 and controller 220 may be located in building 102.

The first unit 200 may include a heat exchanger (not shown) that will serve as a condenser/gas cooler and/or as an evaporator, as part of a vapor compression refrigeration cycle.

In the FIGURES, the locations of all components in the drawings are examples, and embodiments include modification of the locations of components shown in the drawings. For example, components illustrated as connected to the first unit 200, may be retrofit components added to an existing first unit 200. Although shown as separate boxes, elements may be joined into sub-assemblies and assemblies, anywhere in the system, indoor or outdoor, without departing from embodiments of the invention.

The controller 220 may communicate with an air conditioning controller system controller and/or an energy storage device controller. In some embodiments, a single controller may implement all the functions of the controller 220, air conditioning controller and energy storage device controller. The controller 220 communicates with components of the described systems using wired and/or wireless connections, which are not illustrated in the drawings.

The system of FIG. 1, and embodiments thereof described herein, allow for one or more components of the air conditioning system, and other loads not associated with the air conditioning system, to be powered solely by an AC power grid, powered solely by the energy storage device 240, and powered by both the AC power grid and the energy storage device 240, in conjunction. The one or more components of the air conditioning system include components in the first unit 200, components in the second unit 250.

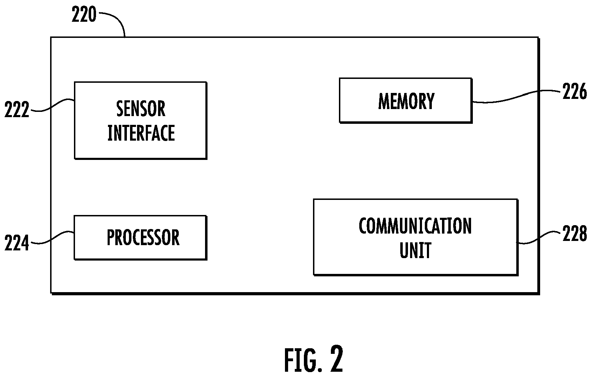

FIG. 2 depicts the controller 220 in accordance with an embodiment. The controller 220 includes a sensor interface 222 that can obtain operational parameters of the air conditioning system, such as pressures, temperatures, etc. As known in the art, the controller 220 can adjust operation of the air conditioning system based on sensed operational parameters. The controller 220 includes a processor 224 that controls operation of the system 100. The processor 224 may be implemented using a general-purpose microprocessor executing a computer program stored on a storage medium to perform the operations described herein. Alternatively, the processor 224 may be implemented in hardware (e.g., ASIC, FPGA) or in a combination of hardware/software. The processor 224 allows the controller 220 to perform computations locally, also referred to as edge computing. The processor 224 can send commands to other components of the air conditioning system 100 based on a result of the local computations.

The controller 220 includes a memory 226 that may store a computer program executable by the processor 224, reference data, sensor data, etc. The memory 226 may be implemented using known devices, such as random access memory. The controller 220 includes a communication unit 228 which allows the controller 220 to communicate with other components of the system 100, such as first unit 200, second units 250 and a thermostat 260. The communication unit 228 may be implemented using wired connections (e.g., LAN, ethernet, twisted pair, etc.) and/or wireless connections (e.g., Wi-Fi, near field communications ("NFC"), Bluetooth, etc.).

In some embodiments, communication unit 228 may provide high-speed data communications over existing wiring systems and/or communication with newer equipment having a high-speed bus, while maintaining communications with existing equipment (e.g., having RS-485 communications bus). In some embodiments, an HVAC equipment may include 4 wires used for data communications, Power, Ground, Data+, and Data-. Of these lines, Data+ and Data- are used to carry the low-speed, standard RS-485 data. The power line is used to power the wall control and comes from a second unit 250. This same power line is carried to the first unit 200 although it is generally not used. The ability to take advantage of the power and ground lines of the 4-wire system (referred to as "Power Line Communications" (PLC) technology) allows digital/data signals to be sent over power lines. In some embodiments, PLC technology may allow for data transmission at or near gigabit speed rates using standard 2-conductor wiring. This includes the 2 wires represented by Power and Ground of the HVAC equipment. It should be appreciated that other data transmission speeds may be possible. In some embodiments, the communication unit 228 may be configured such that, while the PLC high-speed communication is occurring over the Power and Ground line of the 4-wire system, the low-speed RS-485 communication can also be occurring on the Data+ and Data- lines. In some embodiments, the ability to use high speed communications or a combination of high speed and low speed communications enable the controller 220 to utilize machine-learning (ML) based or artificial intelligence (AI) based, algorithms. In some embodiments, the high speed and low speed communications may occur approximately simultaneously (e.g., within milliseconds of one another). This may allow the standard HVAC wire to communicate with both RS-485 controlled equipment as well as HVAC equipment which contains the additional PLC transceivers. This may be advantageous because both new high-speed HVAC equipment and existing RS-485 HVAC equipment can co-exist on existing wiring of the building.

Referring to FIG. 1, the power converter 230 is used to perform any necessary power conversions including one or more of AC-AC, AC-DC, DC-AC and DC-DC. The power converter 230 may include several power converters at different locations in the system 100. The power converter(s) 230 may operate in a bi-directional manner so that one or more power conversions are bi-directional. As shown in FIG. 1, the power converter 230 is connected to AC and/or DC power sources and/or loads. The power converter 230 may also provide power to loads in the building 102, including the second units 250 (if in the building 102), the thermostat 260 and loads 270. In conventional modes, the loads in building 102 will receive AC power from the AC power grid directly. The controller 220 may choose whether the power will come from the AC power grid or from the power converter 230. Example embodiments of the power converter 230 are described herein.

The energy storage device 240 is configured to provide, under certain circumstances, at least a portion of the power to operate one or more of components of the air conditioning system, such as the first unit 200, the second unit(s) 250, along with the indoor load(s) 270, and any other loads. The energy storage device 240 may be implemented using apparatus for storing electrical energy including one or more of, for example, a battery, battery modules, battery cells, supercapacitor, etc. The battery 240 may include several cells in either modular form or as a stand-alone, multi-cell array. The battery 240 may be made of a single or multiple packaged self-contained systems, battery modules or individual cells. The battery 240, such as a complete plug and play battery, may include a box, wires, cells, and modules. For example, the battery 240 may include a group of cells configured into a self-contained mechanical and electrical unit. The energy storage device 240 may include other components (e.g., an ESD management system (ESDMS)) that are electrically coupled to the energy storage device 240 and may be adapted to communicate directly or through the ESDMS to controller 220.

The first unit 200 also includes components used as part of the air conditioning system, and includes a compressor 242, one or more drives 244, a fan 246, and other loads 248, and a control unit (not shown). A heat exchanger (not shown) in the first unit 200 may act as evaporator or condenser/gas cooler. These components are described in further detail herein when relevant to embodiments.

In a split system, inside the building 102, one or more second units 250 are positioned to condition one or more zones of the building 102. The second units 250 may be employed using a variety of known second units, including variable air volume (VAV) units, liquid cooled second units, fan coil units, furnaces, air handler (s), etc., which usually include heat exchangers. In other types of systems (e.g., packaged or chillers) the second unit(s) 250 may be located outdoors and include any form of heat exchangers such as cooling towers, etc.

An optional thermostat 260 provides a user interface for the air conditioning system 100, and allows the user to enter operational modes of the air conditioning system 100, enter setpoints for various zones of the system 100, etc. The indoor loads 270 may be supplied electrical power by the first unit 200. The indoor loads 270 include a wide variety of loads, such as appliances, lighting, electric vehicle chargers, etc. A thermostat 260 is not required and other techniques may be used for control of the air conditioning system.

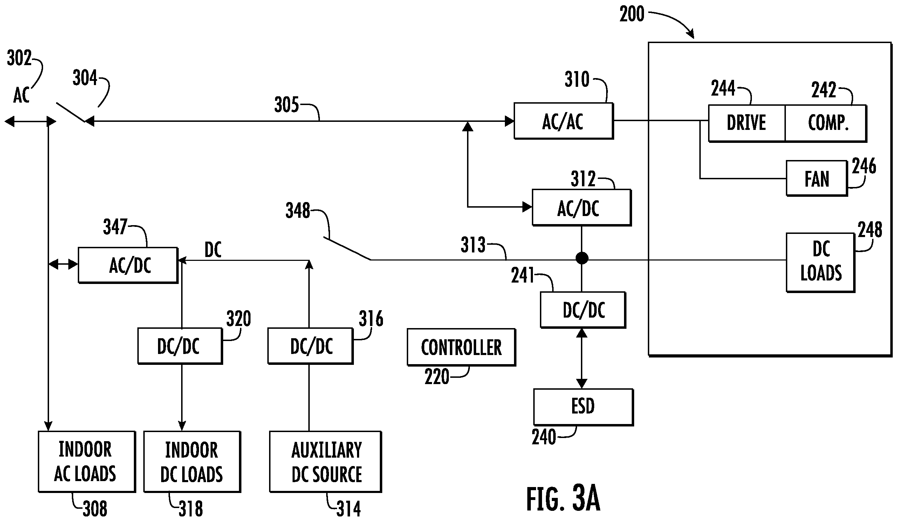

FIG. 3A depicts an electrical architecture in an example embodiment. The location of components in FIG. 3A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

As shown in FIG. 3A, an AC power grid 302 is connected to the first unit 200 through a grid disconnect 304, which is under control of the controller 220. This allows the first unit 200 to be powered by the energy storage device 240, independent of the AC power grid 302. The first unit 200 may also be powered by both the AC power grid 302 and the energy storage device 240 in conjunctions. The disconnect 304 may also be implemented as a mechanical switch controlled, for example by controller 220 or in software by the controller 220 by controlling one or more power converters.

The AC power grid 302 is connected to indoor AC loads 308 (such as an air handler, or any fixture in residential, commercial, industrial buildings or data centers). The AC power grid 302 is also provided to an AC/AC converter 310 which supplies conditioned AC power to a compressor drive 244A of the compressor 242 and the fan 246. The AC/AC converter 310 may control the amplitude, frequency, phase, etc. of AC power provided to the compressor drive 244A of the compressor 242 and the fan 246.

The AC power grid 302 may also be connected to one of a unidirectional or a bi-directional AC/DC converter 312 which interfaces the AC power bus 305 with a DC power bus 313. The DC power bus 313 supplies power to the DC loads 248, which may be located in the first unit 200. Under certain conditions, the DC power bus 313 supplies power to the one or more of components of the air conditioning system (e.g., compressor 242 and fan 246) through the bi-directional AC/DC converter 312 and the AC/AC converter 310. This allows the one or more of components of the air conditioning system to operate independent of, or in conjunction with, the AC power grid 302. The bi-directional AC/DC converter 312 also allows power from the DC bus 313 to be directed to the AC power grid 302.

The DC power bus 313 may be powered by the energy storage device 240. In charging mode, the DC power bus 313 is used to charge the energy storage device 240 (charger not shown). The DC power bus 313 may also be powered by one or more auxiliary DC sources 314, such as solar DC power, wind DC power, geothermal DC power, fuel cells, etc. A DC/DC converter 316 may be used to couple the auxiliary DC sources 314 to the DC power bus 313. The DC power bus 313 may provide power to indoor DC loads 318. A DC/DC converter 320 may be used to couple the indoor DC loads 318 to the DC power bus 313. An AC/DC converter 347 may be used to couple the DC power bus 313 to indoor AC loads 308 through a disconnect 348. In some operating modes, the energy storage device 240 is used to power indoor AC loads 308. The AC/AC converter 310, the AC/DC converter 312, the DC/DC converter 320, the DC/DC converter 316 and the AC/DC converter 347 may be implementations of the power converter 230 in FIG. 1. In some embodiments, the one or more auxiliary DC sources 314 are connected to the AC power bus 305 through a DC/AC converter (not shown). In other embodiments, the one or more auxiliary power sources provide AC power, which is connected to the AC bus 305 and/or the DC bus 313 through an appropriate AC/AC converter or AC/DC converter.

The compressor drive 244A may be implemented in a variety of manners. In one embodiment, the compressor drive 244A is a switch, such as a contactor or relay, that connects the compressor 242 to the output of the AC/AC converter 310. In other embodiments, the compressor drive 244A may be a power converter, such as an AC/AC converter or an AC/DC converter.

An optional DC/DC converter 241 may provide power conversion between the energy storage device 240 and the DC power bus 313. The DC/DC converter 241 may be a bi-directional converter used to step up or step down a DC voltage so that the energy storage device 240 can power the DC power bus 313 and the DC power bus 313 can charge the energy storage device 240. The DC/DC converter 241 may be part of the energy storage device 240 or may be a separate component from the energy storage device 240.

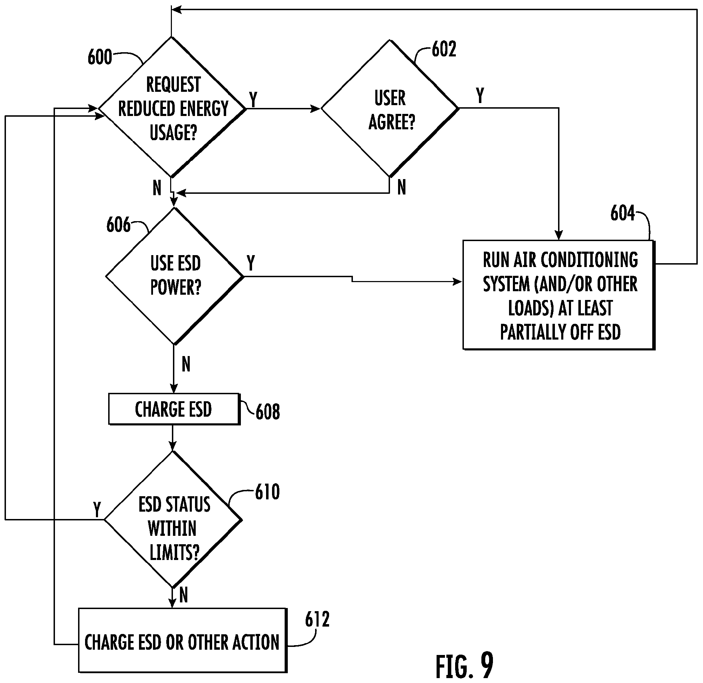

The electrical architecture of FIG. 3A allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

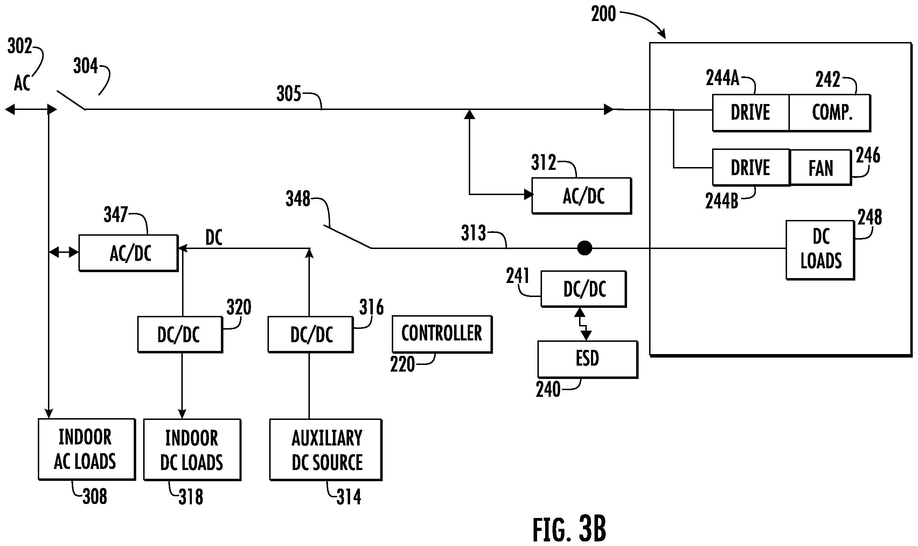

FIG. 3B depicts an electrical architecture in an example embodiment. The location of components in FIG. 3B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

FIG. 3B is similar to FIG. 3A, with the exception that the AC/AC converter 310 is eliminated. The compressor 242 is provided power from a compressor drive 244A. The compressor drive 244A may be a switch, such as a contactor or relay, that connects the compressor 242 to the AC power bus 305. In other embodiments, the compressor drive 244A may be a power converter, such as an AC/AC converter or an AC/DC converter. The compressor drive 244A may be controlled by the controller 220.

The fan 246 is provided power from a fan drive 244B. The fan drive 244B may be a switch, such as a contactor or relay, that connects the fan 246 to the AC power bus 305. In other embodiments, the fan drive 244B may be a power converter, such as an AC/AC converter or an AC/DC converter. The fan drive 244B may be controlled by the controller 220.

The electrical architecture of FIG. 3B allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

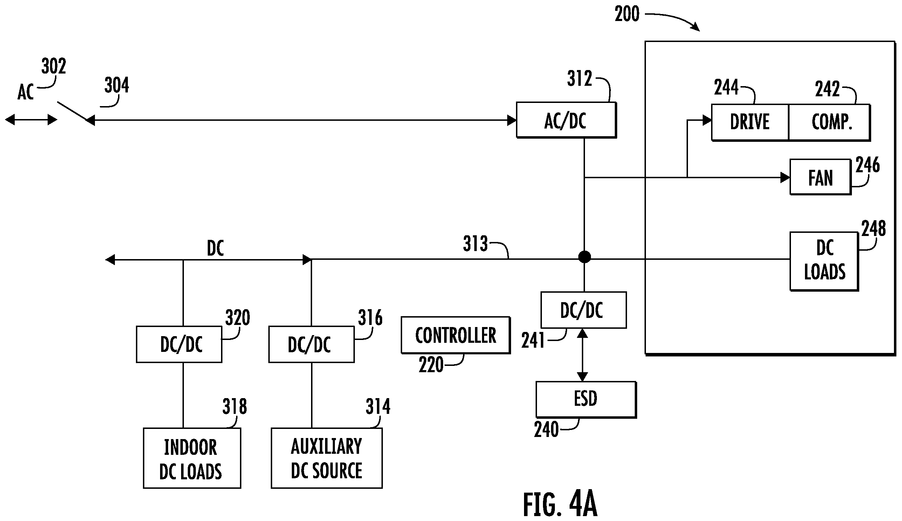

FIG. 4A depicts an electrical architecture in another example embodiment. The location of components in FIG. 4A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

In FIG. 4A, the compressor drive 244A and the fan 246 are DC powered, and as such, there is no need for the AC/AC converter 310. The bi-directional AC/DC converter 312 allows the energy storage device 240 to supply power to one or more components of the air conditioning system and/or feed power from the DC bus 313 to the AC power grid 302, under certain conditions. The bi-directional AC/DC converter 312 interfaces the AC power bus 305 with a DC power bus 313.

The compressor drive 244A may be a switch, such as a contactor or relay, that connects the compressor 242 to the DC power bus 313. In other embodiments, the compressor drive 244A may be a power converter, such as a DC/AC converter or a DC/DC converter. The compressor drive 244A may be controlled by the controller 220.

The electrical architecture of FIG. 4A allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

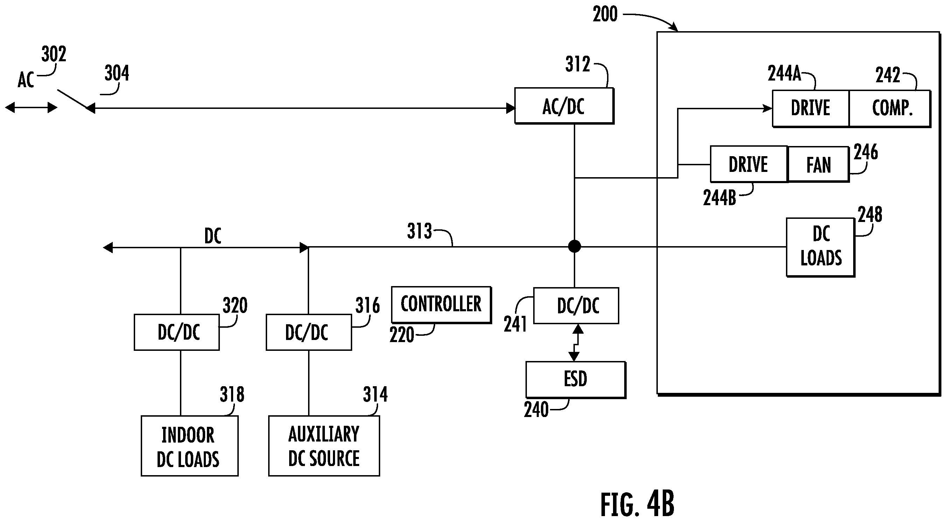

FIG. 4B depicts an electrical architecture in another example embodiment. The location of components in FIG. 4B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

FIG. 4B is similar to FIG. 4A, with the exception that the fan 246 includes a fan drive 244B. The fan drive 244B may be a switch, such as a contactor or relay, that connects the fan 246 to the DC power bus 313. In other embodiments, the fan drive 244B may be a power converter, such as a DC/AC converter or a DC/DC converter. The fan drive 244B may be controlled by the controller 220.

The electrical architecture of FIG. 4B allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

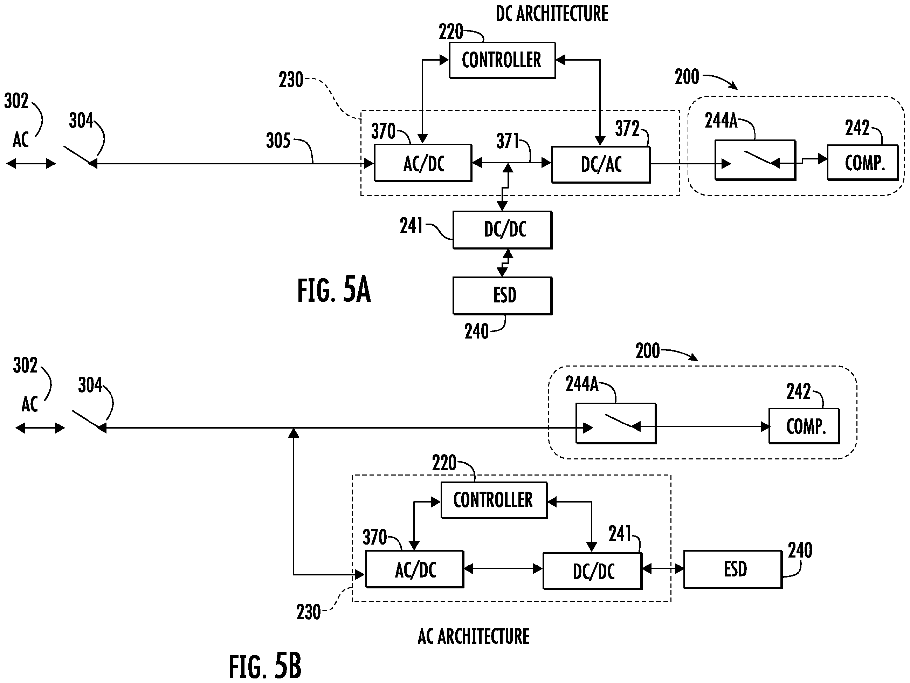

FIG. 5A depicts a DC electrical architecture for a fixed speed first unit 200 in an example embodiment. The location of components in FIG. 5A is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240. As shown in Figure 5A, AC power from the AC power grid 302 is supplied through the grid disconnect 304 to a power converter 230. The power converter 230 includes an AC/DC converter 370 and a DC/AC converter 372. The output of the DC/AC converter 372 is provided to the compressor 242, through a compressor drive 244A. As the compressor 242 is fixed speed, the compressor drive 244A may be a switch, such as a contactor or relay.

Both the AC/DC converter 370 and the DC/AC converter 372 operate under the control of the controller 220. Between the AC/DC converter 370 and the DC/AC converter 372 is a DC link 371 that is connected to the energy storage device 240, optionally through the DC/DC converter 241. Under this arrangement, energy storage device 240 may be charged by the power converter 230. Alternatively, the energy storage device 240 may provide DC power to the DC link 371 to power the DC/AC converter 372 and the compressor 242. This allows the first unit 200 to operate independent of, or in conjunction with, the AC power grid 302. The AC/DC converter 370 may be bi-directional to allow the energy storage device 240 to provide power to, and be charged from, the AC power grid 302.

The controller 220, the power converter 230, the energy storage device 240, DC\DC converters 320 and 316, and AC\DC converter 347, and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240. It allows also for auxiliary power sources to be added in a modular way.

The electrical architecture of FIG. 5A allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

FIG. 5B depicts an AC electrical architecture for a fixed speed first unit 200 in an example embodiment. The location of components in FIG. 5B is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

In FIG. 5B, the power converter 230 includes a DC/DC converter 241 coupled to the energy storage device 240 and an AC/DC converter 370. The AC/DC converter 370 may be bi-directional to allow the energy storage device 240 to provide power to, and be charged from, the AC power grid 302. As the compressor 242 is fixed speed, the compressor drive 244A may be a switch, such as a contactor or relay.

The controller 220, the power converter 230, the energy storage device 240 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240.

The electrical architecture of FIG. 5B allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

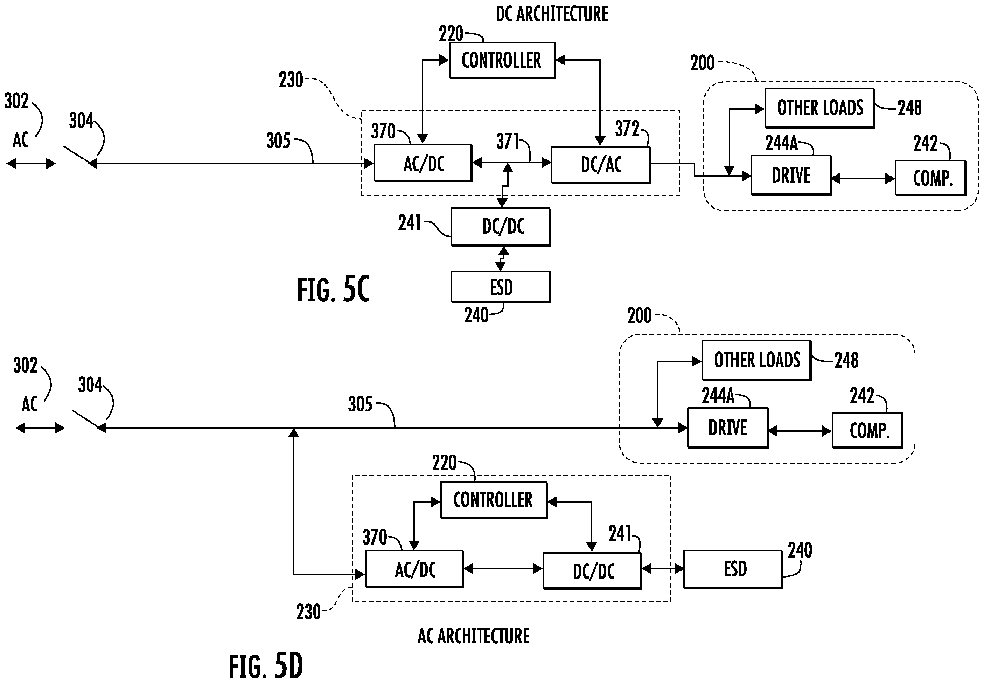

FIG. 5C depicts a DC electrical architecture for a variable speed first unit 200 in an example embodiment. The location of components in FIG. 5C is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

FIG. 5C is similar to FIG. 5A, with the exception that the compressor drive 244A provides for variable speed operation of the compressor 242. Other loads 248 of the first unit 200 may be powered from the output of the DC/AC converter 372.

The controller 220, the power converter 230, the energy storage device 240 and the DC/DC converter 241 may be retrofit to an existing first unit 200. This allows the energy storage device 240 to be added to existing air conditioning systems to enable the first unit 200 to operate independent of the AC power grid 302 or operate under power from both the AC power grid 302 and the energy storage device 240.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

The electrical architecture of FIG. 5C allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

FIG. 5D depicts an AC electrical architecture for a variable speed first unit 200 in an example embodiment. The location of components in FIG. 5D is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

FIG. 5D is similar to FIG. 5B, with the exception that the compressor drive 244A provides for variable speed operation of the compressor 242. Other loads 248 of the first unit 200 may be powered from the AC power bus 305.

Not all components of the first unit 200 are shown for ease of illustration and explanation. The power converter 230 may be used in conjunction with the embodiments described above, or other embodiments. For example, one or more auxiliary DC sources 314 may be connected to the energy storage device 240 (via a DC bus) to supplement power from the energy storage device 240.

The controller 220, the power converter 230 and the energy storage device 240 may be retrofit to an existing first unit 200. This allows the energy storage device 240 to be added to existing air conditioning systems to enable the first unit 200 to operate independent of the AC power grid 302 or operate under power from both the AC power grid and the energy storage device 240.

The electrical architecture of FIG. 5D allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

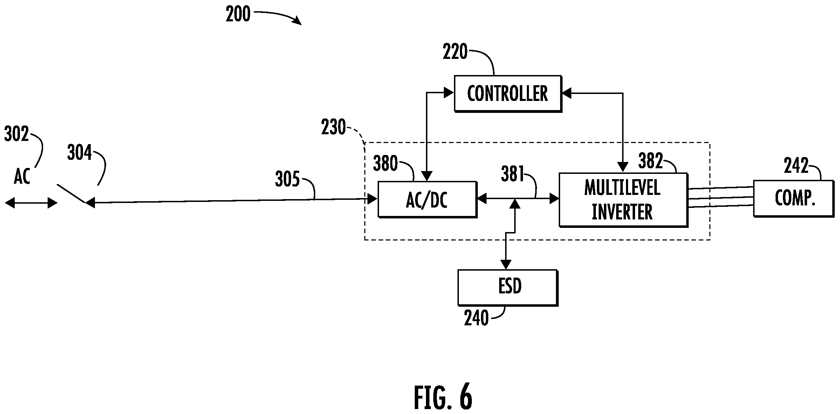

FIG. 6 depicts an electrical architecture having a variable speed compressor drive including a multilevel inverter in an example embodiment. Not all components of the first unit 200 are shown for ease of illustration and explanation. The location of components in FIG. 6 is an example, and any of the components may be located as part of the first unit 200, part of the second unit(s) 250 or as separate from the first unit 200 or second unit(s) 250. This allows for retrofitting components to an existing air condition system. Although shown as separate boxes, elements may be joined into sub-assemblies and assemblies, anywhere in the system, indoor or outdoor, without departing from embodiments of the invention.

As shown in FIG. 6, AC power from the AC power grid 302 is supplied through the grid disconnect 304 to power converter 230. The power converter 230includes an AC/DC converter 380 and a multilevel inverter 382. The output of the multilevel inverter 382 is provided to the compressor 242. The output of the multilevel inverter 382 may be a multi-phase, multi-level waveform configured to drive a multi-phase motor of the compressor 242. In an example embodiment, the multilevel inverter 382 is a five-level, three phase inverter. In another example embodiment, the multilevel inverter 382 is a three-level, three phase inverter.

The multilevel inverter 382 synthesizes a sinusoidal current waveform to run and control the compressor 242. This is done traditionally by a two-level inverter. Integration with the energy storage device 240 allows for a natural progression to higher order inverters. Three and five level inverters require independent power supplies to set the voltage levels. In the embodiment of FIG. 6, the energy storage device 240 can set the voltage levels. The energy storage device 240 may include internal battery modules connected in series. The multilevel inverter 382 directly uses the battery modules for each requisite voltage level thereby enabling the benefits of a multilevel inverter. The multilevel inverter 382 benefits from lower harmonic output and lower dv/dt device stresses. The multilevel inverter 382 increases reliability through the ability to reconfigure to a lower number of levels after a fault has occurred, through the integration of back-to-back switches or relays, connecting or disconnecting battery modules together.

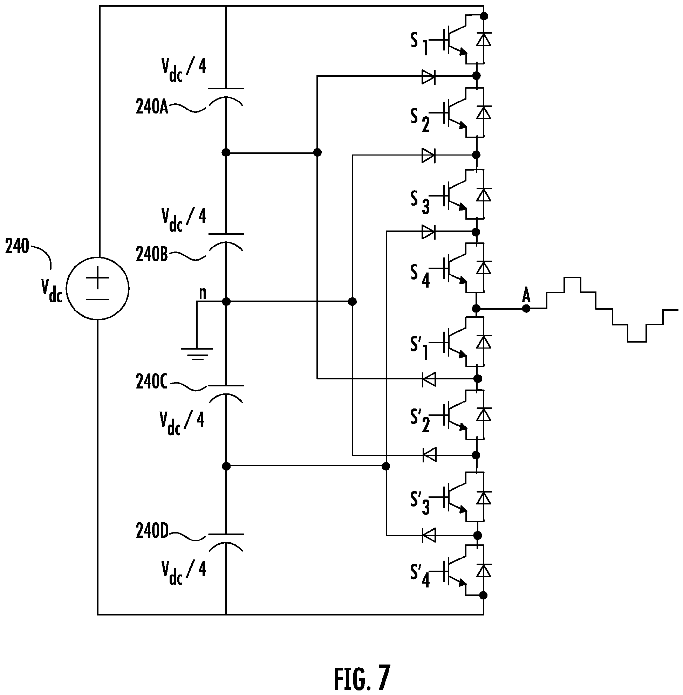

FIG. 7 shows one phase leg of a five level, multiphase inverter in an embodiment of the multilevel inverter 382. The energy storage device 240 includes at least four battery modules 240A, 240B, 240C and 240D, connected in series. The combination of the battery modules 240A, 240B, 240C and 240D, and a neutral point, n, provides the five voltage levels used to create a sinusoidal output waveform on one phase. In general, using N battery module voltages provides for an N+1 level output waveform for each phase. Switches S1-S4 and S 1'-S4' are controlled by the controller 220 to produce a sine wave as known in the art. The multilevel inverter 382 can be reconfigured to fewer levels through the integration of back-to-back switches or relays, connecting or disconnecting battery modules together.

The voltage levels used in the multilevel inverter 382 do not need to be supplied by separate battery modules. The voltage levels used to create the sinusoidal output waveform can be created using one battery module, with the battery voltage being split, for example, by capacitors.

Referring the FIG. 6, both the AC/DC converter 370 and the multilevel inverter 382 operate under the control of the controller 220. Between the AC/DC converter 370 and the multilevel inverter 382 is a DC link 381 that is connected to the energy storage device 240. Under this arrangement, energy storage device 240 may be charged by the power converter 230. Alternatively, the energy storage device 240 may provide DC power to the DC link 381 to power the multilevel inverter 382 and compressor 242. This allows the first unit 200 to operate independent of the AC power grid 302 or operate under power from both the AC power grid 302 and the energy storage device 240. The AC/DC converter 380 may be bi-directional to allow the energy storage device 240 to provide power to, and be charged from, the AC power grid.

The electrical architecture of FIG. 6 allows one or more components of the air conditioning system (first unit 200 and or second unit(s) 250) to be powered exclusively by the AC power grid 302, exclusively by the energy storage device 240, or powered by both the energy storage device 240 and the AC power grid 302, in conjunction. Power supplied by the AC power grid 302 can be limited by the controller 220 controlling the various power converters. Other loads such as indoor DC loads 318 and indoor AC loads 308 can be powered exclusively by the AC power grid 302, exclusively by the energy storage device 240, or powered by both the energy storage device 240 and the AC power grid 302. The one or more auxiliary DC sources 314 may also power one or more components of the air conditioning system (first unit 200 and or second unit(s) 250) and/or other loads, alone or in conjunction with the AC power grid 302 and/or the energy storage device 240. Whether power is supplied from the AC power grid 302, the energy storage device 240, the one or more auxiliary DC sources 314 or a combination of thereof, is based on a variety of factors such as utility status, utility power price, status of the energy storage device 240, consumer preferences, etc. Example conditions are discussed below with reference to FIG. 9.

In the above embodiments, one or more auxiliary DC sources 314 may be used to provide DC power. The one or more auxiliary DC sources 314, may include sources such as solar DC power, wind DC power, geothermal DC power, fuel cells, etc.

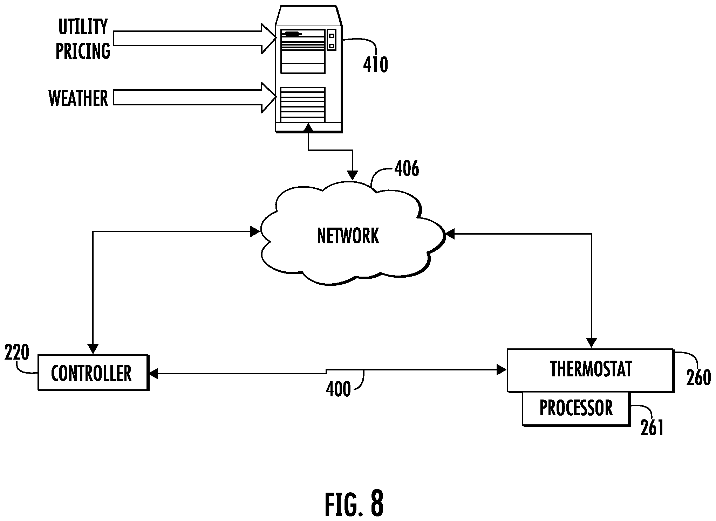

FIG. 8 depicts communication between the controller 220, the thermostat 260 and a remote system 410 in an example embodiment. As noted above, the controller 220 may be integrated as part of an air conditioning controller and/or a battery controller, or be independent and communicating to the air conditioning controller and/or energy storage controller. The controller 220 communicates with the thermostat 260 over a local link 400. The local link 400 may be a wired connection (e.g., twisted pair, four wire, power line communication, Modbus, CAN bus, etc.) and/or a wireless connection (e.g., WiFi, radio or Bluetooth, NFC, etc.). The thermostat 260 may also be implemented using a software application operating on a user device (e.g., mobile phone, tablet, laptop). The thermostat 260 may also provide occupancy, past performance, and weather information to the controller 220.

One or both of the controller 220 and the thermostat 260 may be in communication with a remote system 410 over a network 406. The network 406 may be a long range network and may be implemented by a variety of communication protocols. The network 406 may be implemented via one or more networks, such as, but are not limited to, one or more of WiMax, a Local Area Network (LAN), Wireless Local Area Network (WLAN), a Personal area network (PAN), a Campus area network (CAN), a Metropolitan area network (MAN), a Wide area network (WAN), a Wireless wide area network (WWAN), or any broadband network, and further enabled with technologies such as, by way of example, Global System for Mobile Communications (GSM), Personal Communications Service (PCS), Bluetooth, Wi-Fi, Matter, Fixed Wireless Data, 2G, 2.5G, 3G (e.g., WCDMA/UMTS based 3G networks), 4G, IMT-Advanced, pre-4G, LTE Advanced, 5G, 6G, mobile WiMax, WiMax 2, WirelessMAN-Advanced networks, enhanced data rates for GSM evolution (EDGE), General packet radio service (GPRS), enhanced GPRS, iBurst, UMTS, HSPDA, HSUPA, HSPA, HSPA+, UMTS-TDD, 1xRTT, EV-DO, messaging protocols such as, TCP/IP, SMS, MMS, extensible messaging and presence protocol (XMPP), real time messaging protocol (RTMP), instant messaging and presence protocol (IMPP), instant messaging, USSD, IRC, or any other wireless data networks, broadband networks, or messaging protocols.

The remote system 410 may be embodied as any type of processor-based computation or computer device capable of performing the functions described herein, including, without limitation, a computer, a server, a workstation, a desktop computer, a laptop computer, a notebook computer, a tablet computer, a mobile computing device, a wearable computing device, a network appliance, a web appliance, a distributed computing system (e.g., cloud computing), a processor-based system, and/or a consumer electronic device. The remote system 410 provides information that is used by the controller 220 and/or thermostat 260 to implement an energy management routine that controls how power is consumed by the one or more components of the air conditioning system and the loads 270. The information provided by the remote system 410 may include utility pricing, indicating the cost of electricity on the AC power grid 302 and weather information, which may be used to predict future utility pricing and usage of the one or more components of the air conditioning system. The utility pricing and weather may be pushed to, or pulled by, the remote system 410 using known networking techniques. The utility pricing and/or weather may be determined in real time or be forecasts of future conditions.

In the above-described embodiments, the controller 220 communicates with components of the described systems using wired and/or wireless connections, which are not illustrated in the drawings. Depending on the power sources used in an operation mode (e.g., one or more of AC grid power, energy storage device power, auxiliary power sources, etc.) the controller 220 sends command signals to the various system components, (for example, AC/AC converter 310, AC/DC converter 312, AC/DC converter 347, DC/DC converter 320, DC/DC converter 316, DC/DC converter 241, AC/DC converter 370, DC/AC converter 372, AC/DC converter 380 and/or multilevel inverter 382, AC disconnect 304, etc.) to route power to one or more components of the air conditioning system, such as the first unit 200, the second unit(s) 250, along with the indoor load(s) 270, and any other loads.

FIG. 9 depicts an energy management process in an example embodiment. The process may be performed by the controller 220 and/or by the thermostat 260. At 600, the controller 220 determines if a request for a reduction in energy usage is present, or any other communication signal, such as a change in energy pricing, or an incentive. The utility provider may request a reduction in energy usage during a certain period of time to avoid a service interpretation (e.g., a brownout), or other penalty or incentive such as a change in pricing. The request for a reduction in energy usage may be accompanied by an incentive (e.g., $5 off next energy bill). The request for reduction may also originate from an energy consumer, such as a data center, where the data center needs to maintain their processing and/or cooling loads and incentivizes other users to decrease their consumption to ensure energy availability.

If a request for a reduction in energy usage is present, flow proceeds to 602 where a user (e.g., a customer of the utility) can approve or deny the request to reduce energy usage. The approve or deny determination may be pre-established by the user and pre-programmed into the controller 220 and/or the thermostat 260. For example, the user may wish to always reduce energy consumption, regardless of the terms. The user may wish to never reduce energy consumption, regardless of the terms. The user may wish to reduce energy consumption only if the utility offers an incentive. The approve or deny determination at 602 may also be in real time, where the user enters an approval or denial of reduced energy consumption through the thermostat 260 or through a mobile device.

If the user approves reduced energy usage at 602, flow proceeds to 604 where one or more components of the air conditioning system (if needed), and/or other loads, are powered, at least in part, by the energy storage device 240. This may entail opening the AC disconnect 304 (e.g., power from the AC power grid 302 is zero) and powering one or more components of the air conditioning system and/or other loads, using only the energy storage device 240. Operating one or more components of the air conditioning system and/or other loads may also include using both the AC power grid 302 and the energy storage device 240, in conjunction, to power the one or more components of the air conditioning system and/or other loads. The controller 220 can limit the amount of power drawn from the AC power grid 302 by controlling the various power converters 230 in the system (e.g., AC/AC converter 310, AC/DC converter 312, AC/DC converter 347, DC/DC converter 320, DC/DC converter 316, DC/DC converter 241, AC/DC converter 370, DC/AC converter 372, AC/DC converter 380 and/or multilevel inverter 382) to reduce the amount of AC power drawn from the AC power grid 302. The energy storage device 240 and the AC power grid 302 are used in conjunction to power one or more components of the air conditioning system and/or one or more loads.

Operating the one or more components of the air conditioning system using the energy storage device 240 may also include limiting the amount of power used from the AC power grid 302 to a power limit (e.g., 1 kW during 2 hours). The controller 220 can limit the amount of power drawn from the AC power grid 302 by controlling the various power converters 230 in the system (e.g., AC/AC converter 310, AC/DC converter 312, AC/DC converter 347, DC/DC converter 320, DC/DC converter 316, DC/DC converter 241, AC/DC converter 370, DC/AC converter 372, AC/DC converter 380 and/or multilevel inverter 382) to reduce the amount of AC power drawn from the AC power grid 302. At 604, other loads may be powered by the energy storage device 240, including indoor load(s) 270, which may include indoor DC load(s) 318 and/or indoor AC load(s) 308. The process returns to 600.

At some point, the energy storage device 240 will lack sufficient charge such that the one or more components of the air conditioning system will need to be powered exclusively by the AC power grid 302. The controller 220 can detect when a status, such as state of charge (SOC), state of health (SoH), voltage, temperature, etc., of the energy storage device 240 is not within acceptable limits to power the one or more components of the air conditioning system or other loads. If the status of the energy storage device 240 is not within acceptable limits, the one or more components of the air conditioning system and/or other loads need to be powered by the AC power grid 302. This results in discontinuing discharging the energy storage 240 and/or initiating charging the energy storage device 240.

If the utility, or some other source, has not requested to reduce the energy usage at 600, flow proceeds to 606 where the controller 220 determines if the system 100 should use power from the energy storage device 240. One example of a situation where the system 100 should use power from the energy storage device 240 occurs when the utility power is at least one of at a peak price, approaching a grid capacity or at the grid capacity. This determination may be made in real time or may be made previously using forecasting and communicated to the air conditioning system from the utility. Peak price does not necessarily require that the price for electricity be at a maximum, but is generally known in the art as a period of higher than average energy costs. Whether the utility is at a peak price may be determined by utility pricing obtained from the remote system 410 or current or future weather information obtained from the remote system 410. This information may also be locally stored at controller 220. If the utility is at least one of at a peak price, approaching a grid capacity or at the grid capacity, flow proceeds to 604 where the one or more components of the air conditioning system and loads 270, including indoor AC loads 308 and/or other loads are powered by the energy storage device 240 alone or in conjunction with the AC power grid 302. The controller 220 can limit the amount of power drawn from the AC power grid 302 by controlling the various power converters 230 in the system, as noted above. The utility power at a peak price and grid capacity are not the only factors that may be relied on in determining that the system should use power from the energy storage device 240.

With respect to grid capacity, information regarding the grid capacity and current grid load can be obtained from a remote system, such as the source of the utility pricing. If the AC power grid 302 is at grid capacity or approaching grid capacity (e.g., within a threshold range of grid capacity and, optionally, increasing), then it may be prudent to use power from the energy storage device 240 to avoid a power disruption.

Another example of a situation where the system should use power from the energy storage device 240 occurs when a user requests reduced energy usage. The user may use the thermostat 260 to place the system 100 in reduced energy usage mode (e.g., eco-friendly mode) which causes the system to use power from the energy storage device 240 to power one or more components of the air conditioning system.

In another example, the system may use power from the energy storage device 240 based on machine learning (ML) and/or artificial intelligence (AI) control algorithms implemented by controller 220 based on data from block 602 (e.g., User agree), or based on data from block 600 (e.g., Request reduced energy usage).

If at 606, the system should not use power from the energy storage device 240, flow proceeds to 608 where the energy storage device 240 is charged using the AC power grid 302. At 610, the controller 220 determines if the battery status is within acceptable limits, including state of charge (SOC), state of health (SoH), temperature, voltage, or status beyond safety and/or operational limits. If yes, flow returns to 600. At 610, the controller 220 can detect parameters of the energy storage device 240, to confirm that parameters such as state of health of the battery, operating range, temperature range, voltages, capacity, etc., are within the valid limits.

It should be noted that the energy storage device 240 may be charged even if the utility power is at a peak price. This may include failure modes, test modes, etc. Thus, charging the energy storage device 240 is not limited to off-peak utility power price times.

If at 610, the energy storage device has a status that is not within acceptable limits, flow proceeds to 612 where the energy storage device 240 may be charged if the SoC is low or may be disconnected completely if the energy storage device 240 is not operating per safety and/or operational limits.

While FIG. 9 refers to operating one or more components of the air conditioning system and/or other loads to reduce power consumption, other techniques may be used to reduce power consumption, such as using a variable speed drive to reduce compressor speed, changing a thermostat set-point, etc. In other embodiments, the utility could request an increase in energy usage. This request can be a real-time or a future request based on predicted conditions. Increasing energy usage may include charging the energy storage device 240.

One or more operations of the process of FIG. 9 may be performed by the thermostat 260, if the thermostat 260 is equipped with a processor 261. The processor 261 may be implemented using a general-purpose microprocessor executing a computer program stored on a storage medium to perform the operations described herein. Alternatively, the processor 261 may be implemented in hardware (e.g., ASIC, FPGA) or in a combination of hardware/software. The controller 220 and thermostat may perform all or some of the operations of FIG. 9, in conjunction or individually.

In other embodiments, the controller 220 and/or the thermostat 260 executes a system enhancement routine to improve performance of the entire air conditioning system, based on optimization (including model predictive controls) or machine learning techniques, considering carbon impact, energy performance, energy cost, lifecycle cost, lifetime impact on equipment, reliability. The system enhancement routine may operate with or without use of information regarding weather, occupancy, historical usage, customer preferences, equipment performance maps (HVAC, battery), potential for energy outages etc. Machine learning techniques on customer preferences, usage, elasticity of decisions regarding temperature, cost, environmental issues, etc. could be used to improve controls logic, and optimization. Other control strategies such as pre-cooling and preheating, that have an advantage on cost, performance, efficiency, environment, comfort, reliability, may be implemented by the controller 220 and/or the thermostat 260.

As described above, embodiments can be in the form of processor-implemented processes and devices for practicing those processes, such as a controller 220 and/or the thermostat 260. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes a device for practicing the embodiments. When implemented on a general-purpose microprocessor, the computer program code segments configure the microprocessor to create specific logic circuits.

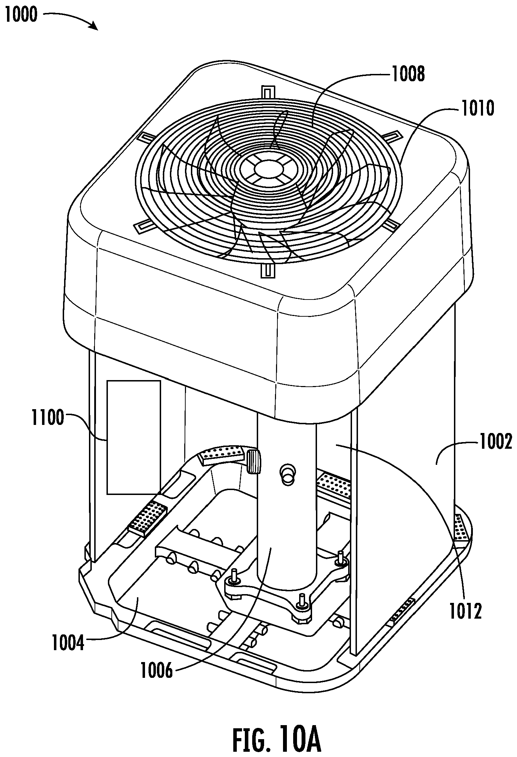

With reference now to FIG. 10A, an example of an outdoor unit 1000 of an air conditioning system is illustrated. As shown, the outdoor unit 1000 includes a heat exchanger 1002 having a generally square structure, such as C or U-shaped for example, although embodiments where the heat exchanger 1002 is rectangular, cylindrical, V-shaped, N-shaped, or other shapes are also within the scope of the invention. As shown, the outdoor unit 1000 may additionally include a base pan 1004 arranged at the bottom of the outdoor unit 1000 and configured to hold the heat exchanger 1002 in place. The base pan 1004 may also be configured to prevent condensate from collecting in the base pan 1004. A compressor 1006 is arranged in fluid communication with the heat exchanger 1002. As shown, the compressor 1006 is mounted to the base pan 1004 such as at a central location within the interior of the outdoor unit 1000 defined by the heat exchanger 1002. The compressor 1006 is operable to pump a heat transfer fluid through a vapor compression cycle. Examples of the heat transfer fluids contemplated for use in the outdoor unit 1000 described herein include but are not limited to refrigerants such as those with a low global warming potential, CO2, oil, brine, and other suitable fluids. Disposed in communication with a surface of the heat exchanger 1002 is a fan assembly 1008 configured to draw ambient air radially inward, through the heat exchanger 1002, after which the air is discharged upwardly through an opening 1010.

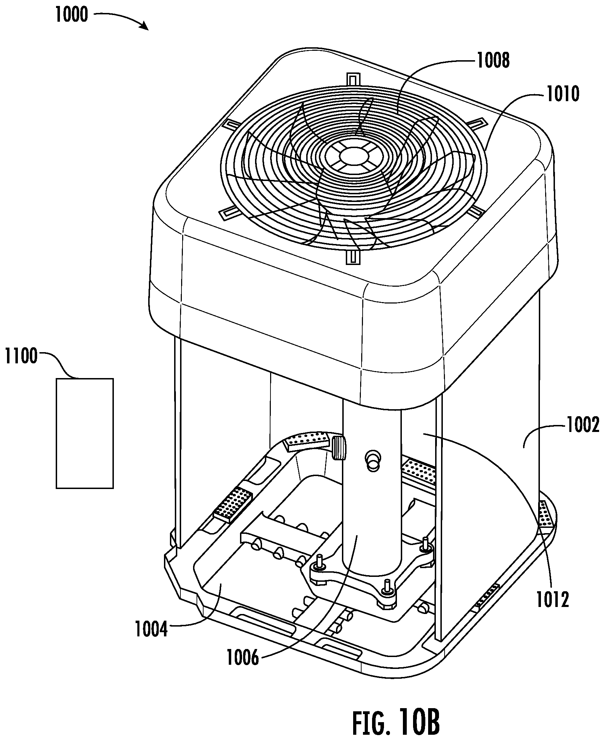

With continued reference to FIG. 10A, when an energy storage device 1100 is associated with an outdoor unit 1000, the energy storage device 1100 may be located within the interior 1012 of the outdoor unit 1000, such as within the area defined between an interior surface of the heat exchanger 1002, the base pan 1004, and the fan assembly 1008. Positioning the energy storage device 1100 within the interior 1012 of the outdoor unit 1000 has the benefit of protecting the energy storage device 1100 from direct contact with the elements, such as rain and snow. Alternatively, or in addition, an energy storage device 1100 may be located at an exterior of the outdoor unit 1000, such as below the base pan 1004 of the outdoor unit for example, the energy storage device 1100 may be within the same footprint as the outdoor unit 1100. Alternatively, or in addition, an energy storage device 1100 may even be at a location remote from the outdoor unit (see FIG. 10B).

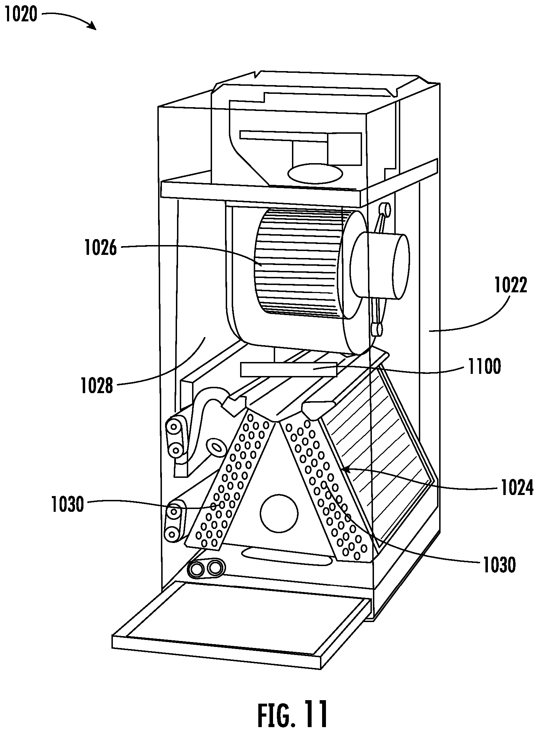

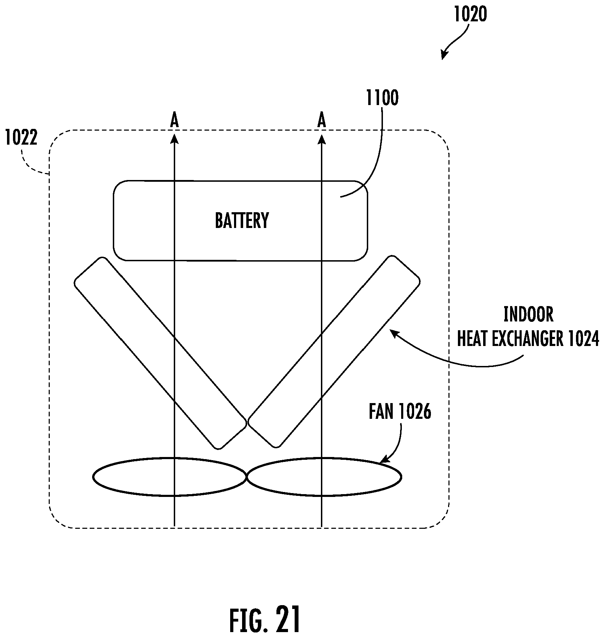

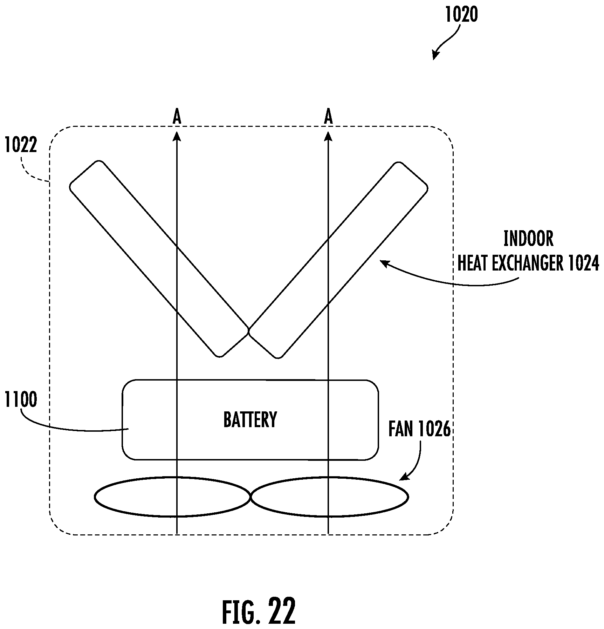

In other embodiments, as shown in FIG. 11, the energy storage device 1100 may be associated with an indoor unit 1020 of an air conditioning system. An example of an indoor unit 1020 in the form of a fan coil unit is illustrated. As shown, the fan coil unit includes a cabinet 1022 within which a heat exchanger assembly 1024 and a fan assembly or blower 1026 are positioned. The fan assembly 1026 is configured to circulate a flow of air through the heat exchanger assembly 1024 to condition (heat or cool) the air prior to delivery to an area to be conditioned. Although the fan assembly 1026 is illustrated as being located downstream from the heat exchanger assembly 1024 relative to the flow of air through the cabinet 1022, it should be appreciated that embodiments where the fan assembly 1026 is located upstream from the heat exchanger assembly 1024 (see FIGS.21 and 22) are also within the scope of the invention. Further, it should be appreciated that an indoor unit 1020 having another configuration, such as including a furnace for example, is also contemplated herein. Regardless of the configuration of the indoor unit 1020, the energy storage device 1100 may be located within the interior 1028 of the cabinet 1022, or alternatively, remotely therefrom.

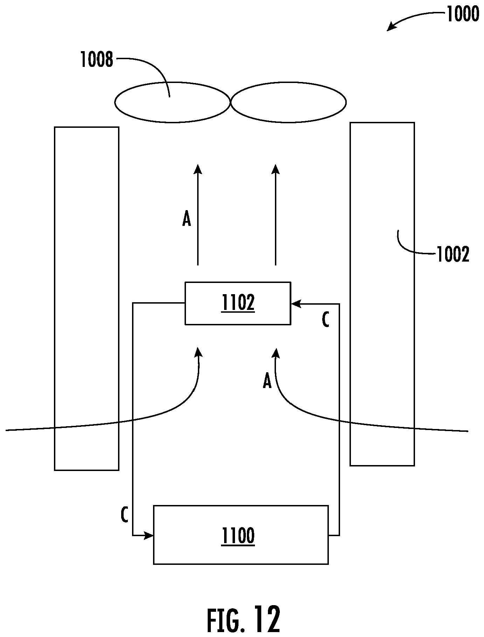

An energy storage device 1100 as illustrated in FIGS. 10A-11 and described herein will generate heat when operated and when charging. Accordingly, thermal management of the energy storage device 1100, regardless of its location relative to the air conditioning system, will be required to reduce the risk of occurrence of a thermal runaway event. With continued reference to FIGS. 10A-11 and further reference to FIGS. 12 - 22, thermal management, and in particular cooling, of an energy storage device 1100 may be performed using an air flow through a corresponding indoor unit 1020 or outdoor unit 1000 of the air conditioning system. In some embodiments, the energy storage device 1100 is part of a closed loop coolant cycle including a coolant heat exchanger 1102. A pump or other movement mechanism 1104 may be configured to circulate a coolant C within the coolant circuit. The coolant C is configured to absorb heat as it flows through or across a surface of the energy storage device 1100 and the heat is then rejected to the air flow A at the coolant heat exchanger 1102.

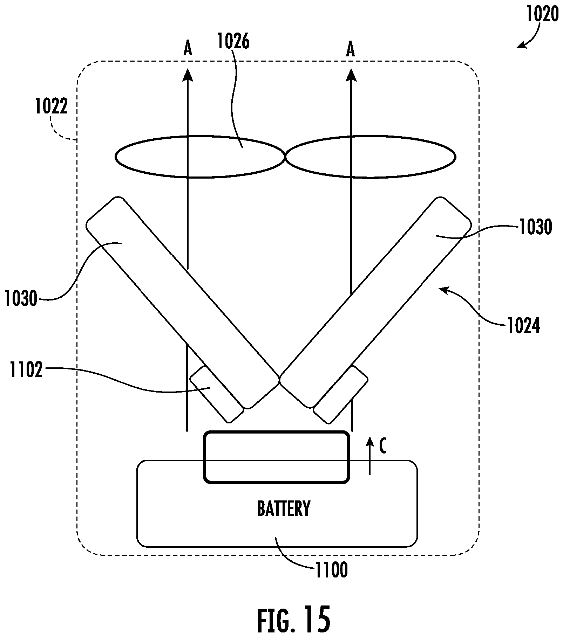

As shown, the coolant heat exchanger 1102 may be arranged within the interior of the indoor unit 1020 or outdoor unit 1000 whether or not the energy storage device 1100 is also arranged within the interior of the indoor unit 1020 or outdoor unit 1000. In the illustrated, non-limiting embodiments illustrated in FIGS. 12-15, the coolant heat exchanger 1102 is separate or located remotely from the heat exchanger 1002, 1024 of the outdoor unit 1000 or the indoor unit 1020 configured to receive a flow of the heat transfer fluid. Although the coolant heat exchanger 1102 is illustrated in FIGS. 12-14 as being separated from an interior or downstream surface of the heat exchanger 1002, 1024 by a clearance, embodiments where the coolant heat exchanger 1102 is a separate heat exchanger arranged in direct contact with the interior or downstream surface of the heat exchanger 1002, 1024, such as shown in FIG. 15 for example are also within the scope of the invention.

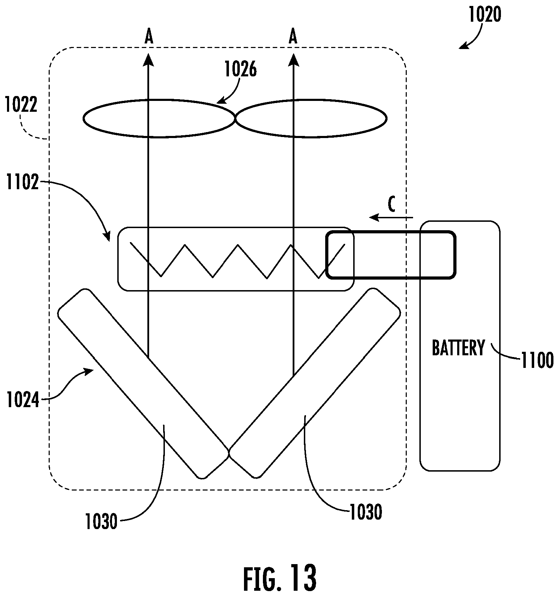

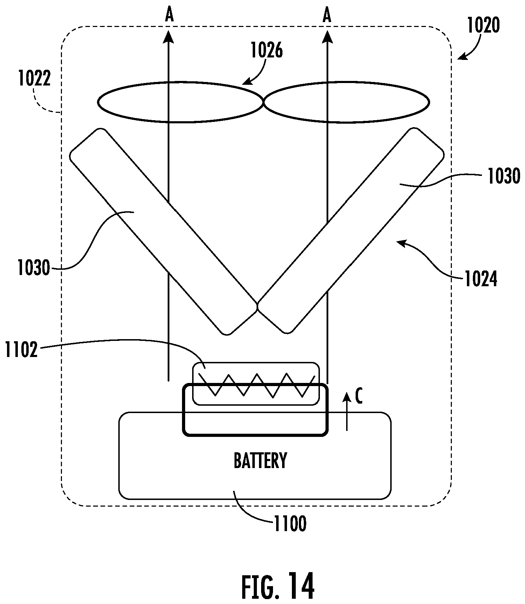

A configuration of the coolant heat exchanger 1102 may be the same or, may be different than a configuration of the heat exchanger 1002, 1024 configured to receive the flow of heat transfer fluid, as shown in the FIGS. For example, in the illustrated, non-limiting embodiment of FIGS. 13 and 14, the heat exchanger assembly 1024 configured to receive the flow of heat transfer fluid has a plurality of heat exchanger coils 1030 arranged in a V-shaped configuration; however, the coolant heat exchanger 1102 has a generally rectangular configuration oriented at an angle to both of the heat exchanger coils 1030. As a result, in some embodiments, only a portion of the air flow A moving through the indoor unit 1020 or outdoor unit 1000 flows through both the coolant heat exchanger 1102 and the heat exchanger 1002, 1024.

In some embodiments, the coolant heat exchanger 1102 is arranged downstream from the heat exchanger 1002, 1024 relative to a flow of air. With reference to the outdoor unit 1000 illustrated in FIG. 12, in operation, air from outside of the outdoor unit 1000 is drawn through the heat exchanger 1002 via the fan assembly 1008. Heat may be transferred from the heat transfer fluid circulating through the heat exchanger 1002 to the flow of air. This partially heated air is then configured to flow through the coolant heat exchanger 1102. However, because the heat generated by the energy storage device 1100 can be significant, the temperature of the heated coolant C is much hotter than temperature of the heated air flow. Accordingly, the heated air flow A output from the heat exchanger 1002 may act as a heat sink to absorb heat from the heated coolant C. The resulting cooler temperature coolant is then returned to the energy storage device 1100 to repeat the coolant cycle. The hot air A is then drawn through the fan assembly 1008 and exhausted into the ambient atmosphere surrounding the outdoor unit 1000. It should be appreciated that in embodiments where the energy storage device 1100 is located at an exterior of the outdoor unit 1000, the hot air A is exhausted in a direction away from the energy storage device 1100.

Similarly, with reference to FIGS. 13 and 14, the coolant heat exchanger 1102 may be arranged within the cabinet 1022 of the indoor unit 1020. As shown, the coolant heat exchanger 1102 may be located either downstream from the heat exchanger 1024 (FIG. 13) or upstream from the heat exchanger 1024 (FIG. 14) relative to the flow of air A through the indoor unit 1020. For example, similar to the embodiment of the outdoor unit 1000 of FIG. 12, the flow of air A within the cabinet 1022 may be cooled within the heat exchanger 1024 prior to absorbing heat from the coolant C within the coolant heat exchanger 1102. Alternatively, the air A may first be heated by the coolant C within the coolant heat exchanger 1102, and heat from the air may then be transferred to the heat transfer fluid within the heat exchanger 1024.

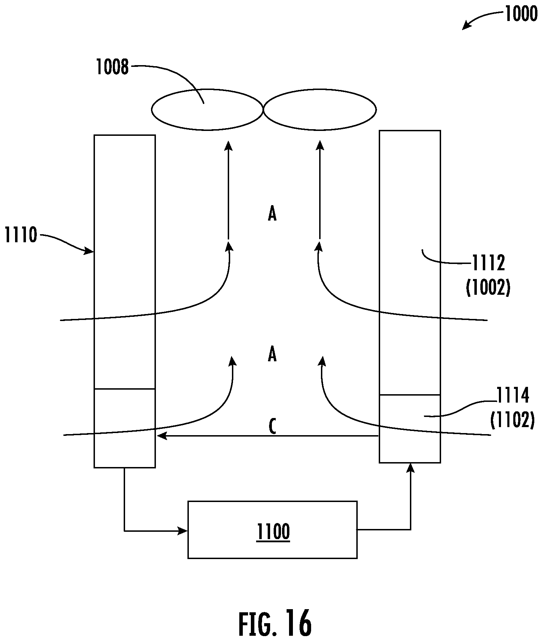

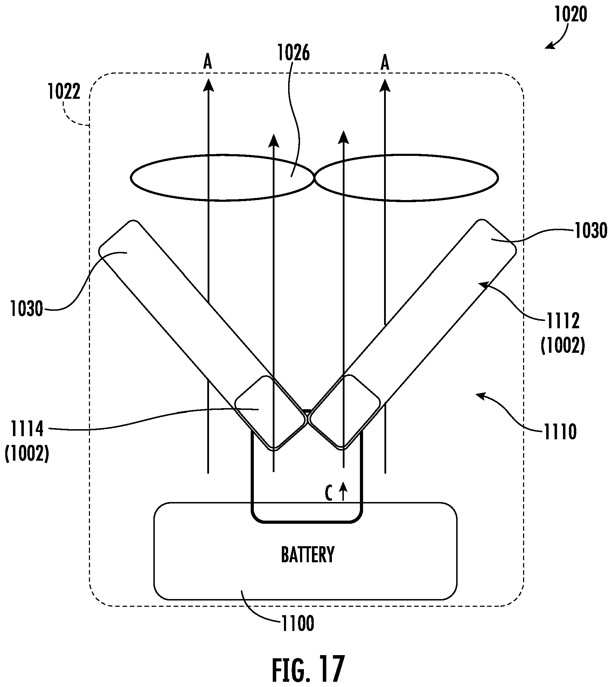

With reference now to FIGS. 16 and 17, in other embodiments, the coolant heat exchanger 1102 may be integrally formed with the heat exchanger 1002, 1024 configured to receive the heat transfer fluid. As shown, a singular heat exchanger 1110 has a body including a plurality of heat exchange tubes divided into first portion 1112 that functions as the heat exchanger 1002, 1024 and a second portion 1114 that functions as the coolant heat exchanger 1102. As shown, the second portion 1114 may be located closer to the energy storage device 1100 than the first portion. Further, the total number of heat exchange tubes arranged within the second portion is selected to suitably cool the coolant C therein and therefore may be greater than, equal to, or less than the total number of heat exchange tubes arranged within the first portion 1112. Accordingly, during operation of either the indoor unit 1020 or outdoor unit 1000, operation of the fan assembly 1008, 1026 is configured to draw a flow of air A through both the first portion 1112 and the second portion 1114 of the heat exchanger 1110 simultaneously.

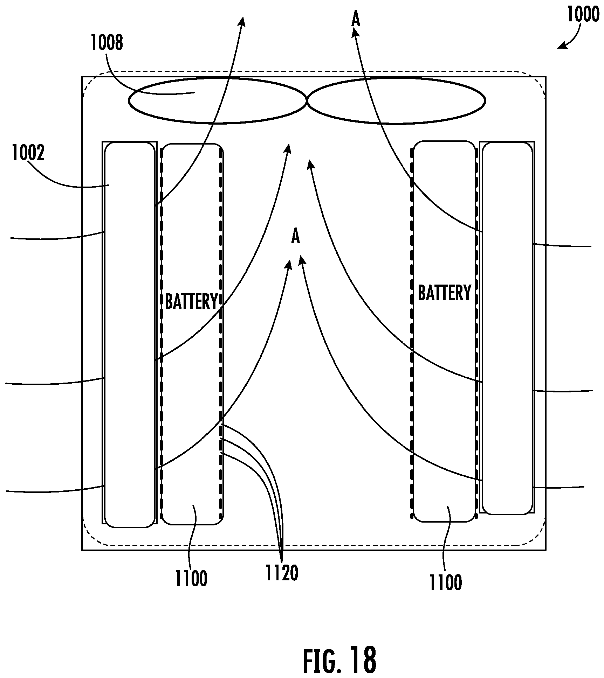

With reference now to FIGS. 18-22, in some embodiments the energy storage device 1100 is directly cooled by the flow of air A through the indoor unit 1020 or outdoor unit 1000. In such embodiments, the energy storage device 1100 is mounted directly within the flow path of the air A. A housing of the energy storage device 1100 may be configured with a plurality of holes, passages, or vents formed at one or more sides thereof to define at least one flow channel 1120 for the air A to travel through the energy storage device 1100.

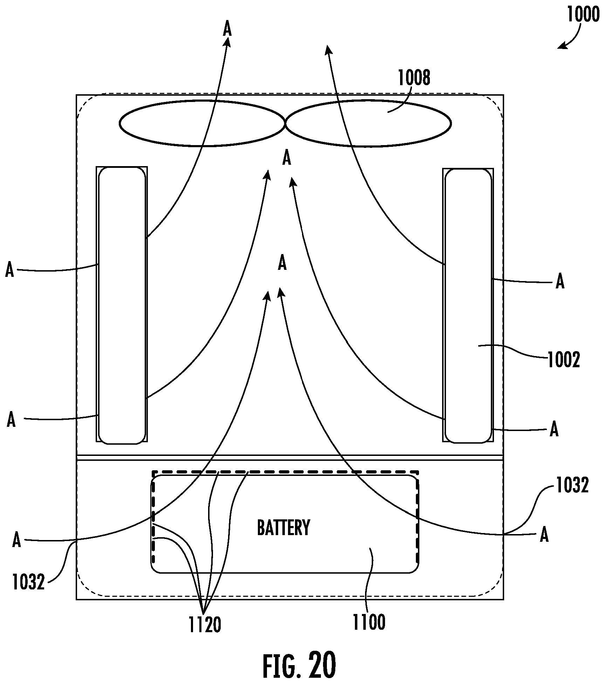

In the outdoor unit 1000 illustrated in FIGS. 18-19, the energy storage device 1100 may be mounted directly downstream from the heat exchanger 1002 relative to the flow of air A. In such embodiments, the configuration of the energy storage device may be selected to position the energy storage device 1100 within the interior of the heat exchanger 1002 while optimizing the surface area of the energy storage device 1100 facing a surface of the heat exchanger 1002 and configured to receive the flow of air A therefrom (FIG. 18). In other embodiments, such as shown in FIG. 20 for example, the energy storage device 1100 may be located within an interior of the outdoor unit 1000, such vertically beneath the heat exchanger 1002. In such embodiments, one or more vents 1032 may be formed in the sides of the outdoor unit 1000 adj acent to the energy storage device 1100 to allow air A to flow through the vents and the heat exchanger 1002 simultaneously and in parallel. The air A from the vents 1032 is configured to flow over, and in some embodiments through the energy storage device 1100, before mixing with the air output from the heat exchanger 1002.

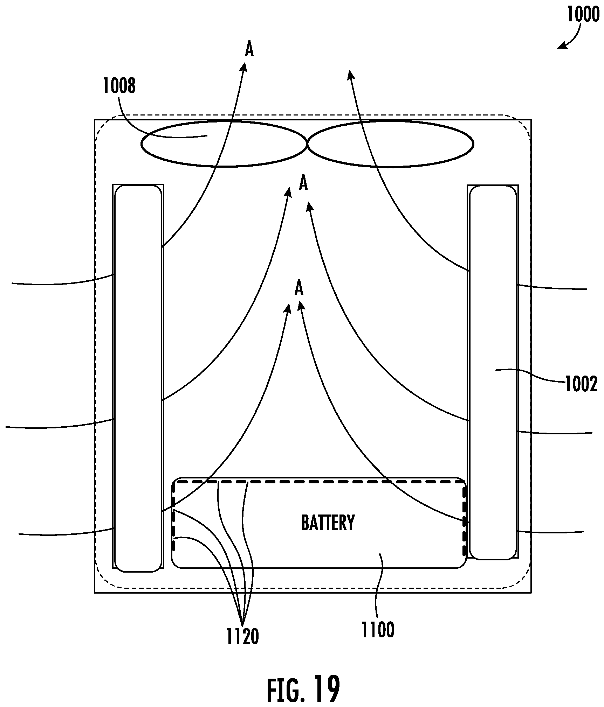

With reference now to FIGS. 21 and 22, the energy storage device 1100 may be arranged at any suitable location directly within the flow of air A through the cabinet 1022. Similar to the embodiments illustrated in FIGS. 18 and 19, the energy storage device 1100 is shown positioned directly downstream from the heat exchanger assembly 1024 relative to the flow of air A. In other embodiments, the energy storage device 1100 is arranged directly upstream from at least a portion of the heat exchanger assembly 1024 relative to the flow of air A through the cabinet 1022.

Alternatively, or in addition to the previously described systems for thermally managing the energy storage device 1100, the energy storage device 1100 may be cooled by the flow of heat transfer fluid circulating within the air conditioning system. In some embodiments, the energy storage device 1100 is directly cooled by the flow of heat transfer fluid circulating within the air conditioning system. In such embodiments, one or more flow channels 1120 configured to receive the heat transfer fluid may extend through the housing of the energy storage device 1100.

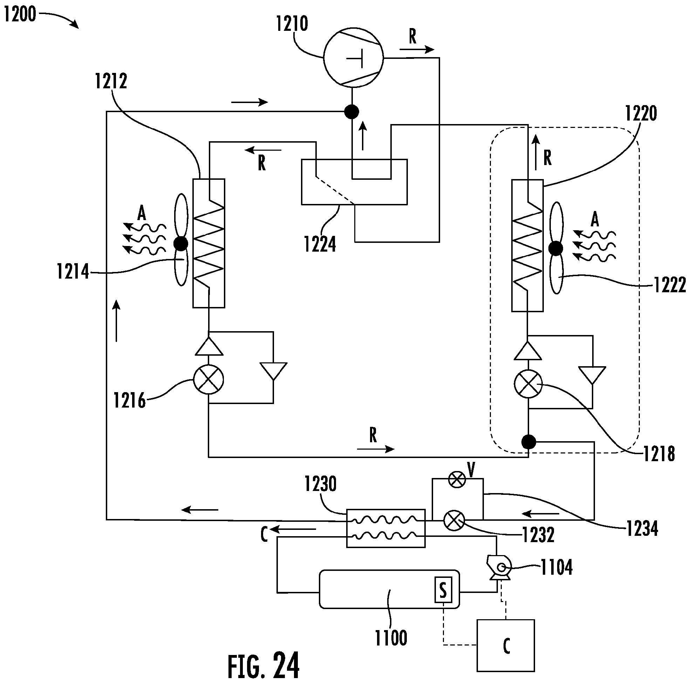

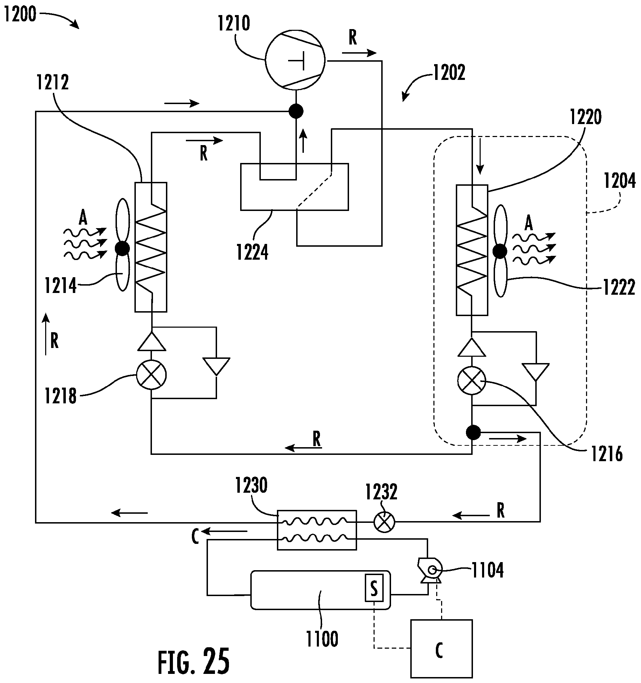

In other embodiments, the energy storage device may be indirectly cooled via the flow of heat transfer fluid within the air conditioning system. With reference to FIGS. 24-25, the energy storage device 1100 may include a coolant loop, and a coolant C within the coolant loop may be cooled via a heat exchange relationship or thermal interface with the vapor compression cycle of the air conditioning system. FIGS. 24 and 25 represent schematic diagrams of an exemplary air conditioning system 1200 in a heating mode and a cooling mode respectively. The air conditioning system 1200 may be a heat pump having a first or indoor portion 1202 positioned inside a building to be conditioned and a second or outdoor portion 1204 positioned outside of the building. It should be understood that embodiments where the heat pump 1200 is installed in a single casing located partially or completely inside or outside of the building are also within the scope of the invention.

At least one compressor 1210 may be located within the indoor portion 1202 or the outdoor portion 1204 of the heat pump 1200. The one or more compressors 1210 may be any suitable single or multistage compressor, including, but not limited to a screw compressor, reciprocating compressor, centrifugal compressor, scroll compressor, rotary compressor, or axial-flow compressor. The compressor(s) 1210 may be driven by an electrically powered motor, or another suitable energy source.

A first heat exchanger 1212 is arranged within the first or indoor portion 1202 and is directly or indirectly fluidly coupled to the one or more compressors 1210. The first heat exchanger 1212 may be any suitable type of heat exchanger configured to transfer heat between a refrigerant and air or another medium. For example, the first heat exchanger 1212 may include one or more coils of thermally conductive material, such as copper, aluminum, alloys thereof, or combinations thereof. In other embodiments, the first heat exchanger 1212 may be a shell-and tube heat exchanger, a printed circuit heat exchanger, a plate-fin heat exchanger, microchannel heat exchange or any combination thereof. In the illustrated, non-limiting embodiment, the air or other medium is moved (drawn or blown) over the first heat exchanger 1212 via a first movement mechanism 1214, such as a fan for example.

The heat pump 1200 includes at least one expansion device. In the illustrated, non-limiting embodiment, a plurality of expansion devices are included. For example, an indoor expansion device 1216 is positioned within the indoor portion 1202 and an outdoor expansion device 1218 may be positioned within the outdoor portion 1204. In such embodiments, a heat transfer fluid is only configured to flow through one of the expansion devices in each direction of flow through the circuit. However, embodiments having only a single expansion device are also within the scope of the invention. The first heat exchanger 1212 is fluidly coupled to the indoor expansion device 1216.

A second heat exchanger 1220 is arranged within the second or outdoor portion 1204 of the heat pump 1200 and is fluidly coupled to the outdoor expansion device 1218. Similar to the first heat exchanger 1212, the second heat exchanger 1220 may be any suitable type of heat exchanger configured to transfer heat between a refrigerant and air or another medium. In the illustrated, non-limiting embodiment, the second heat exchanger 1220 is disposed about the outer extent of the outdoor portion 1204. However, embodiments where the second heat exchanger 1220 is arranged at another location, such as within or proximal to the outdoor portion 1204 are also contemplated herein.

The second heat exchanger 1220 may have any suitable configuration. For example, the second heat exchanger 1220 may include one or more coils of thermally conductive material, such as copper, aluminum, alloys thereof, or combinations thereof. In other embodiments, the second heat exchanger 1220 may be a shell-and tube heat exchanger, a printed circuit heat exchanger, a plate-fin heat exchanger, microchannel heat exchange or any combination thereof. In the illustrated, non-limiting embodiment, the outdoor portion 1204 includes a second movement mechanism 1222, such as a fan assembly for example, to move air or another medium over the second heat exchanger 1220.

The heat pump 20 additionally includes a reversing valve 1224 configured to redirect the flow of refrigerant R therein. In the illustrated embodiment, the reversing valve 1224 is arranged within the outdoor portion 1204 and includes a fluidly separate first flow path and second flow path. In a first state, as shown in FIG. 24, the first flow path fluidly connects an outlet of the one or more compressors 1210 to the first heat exchanger 1212, and the second flow path fluidly connects the second heat exchanger 1220 to an inlet of the one or more compressors 1210. In a second state, the first flow path fluid connects the outlet of the one or more compressors 1210 to the second heat exchanger 1220 and the second flow path fluidly connects the first heat exchanger 1212 to the inlet of the one or more compressors 1210 (FIG. 2B). It should be understood that the heat pump 1200 illustrated and described herein is intended as an example only and that a heat pump having another configuration and/or additional components arranged along the fluid flow path are also within the scope of the invention.

During normal operation of the heat pump 1200, the heat pump is operable in a "heating" mode (FIG. 24). When the reversing valve 1224 is in the first state, refrigerant is configured to flow through the closed refrigeration circuit from the compressor 1210 to the first heat exchanger 1212 acting as a condenser. Within the first heat exchanger 1212, heat is transferred from the refrigerant to the air moving across the first heat exchanger 1212 by the first movement mechanism 1214. This warmed air may be used to heat one or more areas to be conditioned within the building. The partially or fully condensed liquid refrigerant is provided from the first heat exchanger 1212 to the indoor expansion device 1216 where the pressure is reduced causing the refrigerant to be expanded and cooled to a temperature below the ambient temperature. Within the second heat exchanger 1220, heat is transferred to the refrigerant from the air moving across the second heat exchanger 1220 by the second movement mechanism 1222. This heat causes the liquid portions of the refrigerant to evaporate to a gaseous phase. From the second heat exchanger 1220, the refrigerant is returned to the compressor 1210 via the reversing valve 1224.

During normal operation of the heat pump 1200, frost can accumulate on the second heat exchanger 1220. To eliminate, or at least mitigate, this frost, the heat pump 1200 may transition to a defrost mode, such as by switching the reversing valve 1224 to the second state. With the reversing valve 1224 in the second state, shown in FIG. 25, the direction of flow of refrigerant through the closed refrigerant circuit is reversed. Accordingly, the warm, high pressure refrigerant output from the at least one compressor 1210 is routed to the second heat exchanger 1220 such that the second heat exchanger 1220 functions as a condenser rather than as an evaporator. In the defrost mode, the second movement mechanism 1222 may be disabled to prevent air movement through the second heat exchanger 1220, thus enabling the temperature of the second heat exchanger 1220 to increase to a greater degree above the ambient air temperature. From the second heat exchanger 1220, the refrigerant is expanded in the indoor expansion device 1216, and then is delivered to the first heat exchanger 1212, which is configured to operate as an evaporator. Within the first heat exchanger 1212, the refrigerant can absorb heat from the medium moving across the first heat exchanger 1212 via the first movement mechanism 1214. From the first heat exchanger 1212, the refrigerant is returned to the compressor 1210 via the reversing valve 1224. It should be appreciated that the air conditioning system illustrated and described herein is intended as an example only and that an air conditioning system having any suitable vapor compression cycle is within the scope of the invention.

In the illustrated, non-limiting embodiment, an energy storage heat exchanger 1230 is fluidly coupled to the fluid flow path of the heat transfer fluid R at a location downstream from the heat exchanger 1212 or 1220 functioning as the condenser and upstream from a corresponding expansion device 1216, 1218. The energy storage heat exchanger 1230 may be configured as a heat sink to remove heat from the coolant C circulating within the coolant loop. In the illustrated, non-limiting embodiment, the energy storage heat exchanger 1230 is a thermal storage device filled with any suitable phase change material, such as ice or wax for example.

During cooling of the energy storage device 1100, the air conditioning system 1200 may not be running. The heated coolant C flows across, around, and/or through the thermal storage device 1230 causing heat from the coolant C to transfer to the phase change material within the thermal storage device. This heat transfer not only cools the coolant C, but also may cause at least a portion of the phase change material within the thermal storage device 1230 to transform from a first state, such as a solid for example, to a second state, such as a liquid for example. However, embodiments where the first state is a liquid and the second state is a gas are also contemplated herein. The size of the thermal storage device 1230, and in some embodiments the phase change material stored therein, may be selected to sufficiently cool the coolant C circulating through the coolant loop based on the amount of heat generated by and/or to be removed from the energy storage device 1100. Once the energy storage device 1100 is cooled to a desired temperature, the thermal storage device 1230 can be "recharged" by removing the heat therefrom. This heat removal is performed by directing a portion of the flow of the cold heat transfer fluid R output from the heat exchanger 1212, 1220 operating as the condenser to the thermal storage device 1230. In an embodiment, a coolant expansion device 1232 is arranged directly upstream from the thermal storage device 1230 relative to a flow of the heat transfer fluid R. In embodiments where the thermal storage device 1230 is filled with a phase change material, recharging the thermal storage device 1230 via a flow of cold heat transfer fluid causes the phase change material to transform from the second phase back to the first phase. The hot heat transfer fluid R output from the thermal storage device 1230 may be returned directly to an inlet of the compressor 1210. Once the thermal storage device 1230 is recharged, the flow of heat transfer fluid R provided to the thermal storage device 1230 may be stopped.

In some embodiments, the energy storage heat exchanger 1230 may be used to transfer heat to the coolant C circulating within the coolant loop, such as to warm the energy storage device 1100 when the ambient temperature surrounding the energy storage device 1100 or the outdoor unit 1204 is cold. In such embodiments, the heat transfer fluid R is configured to bypass the coolant expansion device 1232 and is provided directly to the energy storage heat exchanger 1230. For example, as shown in FIG. 24, a bypass conduit 1234 is arranged in parallel with the coolant expansion device 1232. The bypass conduit 1234 including a valve V operable to control the flow of the heat transfer fluid through the bypass conduit 1234.

A management system including a controller C is operable to monitor a temperature of the energy storage device 1100. The controller C may be any of the controller 220, the HVAC controller, or an energy storage device controller as previously described herein. The management system may include one or more sensors S operable to monitor a temperature of each of the battery cells of the energy storage device 1100. When the sensed temperature exceeds a heated temperature threshold or is below a cold temperature threshold, the controller C of the management system will energize the pump 1104 causing the coolant C within the coolant loop to circulate. Once the temperature of the energy storage device 1100 has fallen below the threshold or reached a predetermined temperature, operation of the pump 1104 may cease.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present invention is not thus limited. Rather, the present invention can be modified to incorporate any number of variations, alterations, substitutions, combinations, sub-combinations, or equivalent arrangements not heretofore described, but which are commensurate with the scope of the present invention. Additionally, while various embodiments of the present invention have been described, it is to be understood that aspects of the present invention may include only some of the described embodiments. Accordingly, the present invention is not to be seen as limited by the foregoing description but is only limited by the scope of the appended claims.

## Claims

1. An air conditioning system (100; 1200) comprising:
a vapor compression cycle having a plurality of components including a compressor (242; 1006; 1210), an expansion device (1216, 1218; 1232), and at least one heat exchanger (1002, 1024, 1102, 1110; 1212, 1220, 1230), and a heat transfer fluid is configured to circulate within the vapor compression cycle; and
an energy storage device (240; 1100) selectively operable to supply power to one of the plurality of components, wherein the energy storage device is thermally coupled to the vapor compression cycle.

2. The air conditioning system of claim 1, wherein the energy storage device (240; 1100) is arranged directly within a flow path of the heat transfer fluid; optionally
wherein the energy storage device (240; 1100) includes a housing having at least one flow channel (1120) formed therein for receiving the heat transfer fluid.

3. The air conditioning system of claim 1, wherein the energy storage device (240; 1100) is indirectly thermally coupled to the vapor compression cycle.

4. The air conditioning system of claim 3, wherein the at least one heat exchanger (1002, 1024, 1102, 1110; 1212, 1220, 1230) of the vapor compression cycle includes a first heat exchanger (1212), a second heat exchanger (1220), and an energy storage heat exchanger (1230), and the energy storage device (240; 1100) is thermally coupled to the energy storage heat exchanger via a coolant loop.

5. The air conditioning system of claim 4, wherein the energy storage heat exchanger (1230) is a thermal storage device including a phase change material.

6. The air conditioning system of claim 4 or 5, further comprising a coolant expansion device (1232) disposed downstream from one of the first heat exchanger (1212) and the second heat exchanger (1220) and upstream from the energy storage heat exchanger (1230) relative to a flow of the heat transfer fluid; and optionally
further comprising a bypass conduit (1234) arranged in parallel with the coolant expansion device (1232), the bypass conduit including a valve operable to control the flow of the heat transfer fluid through the bypass conduit.

7. The air conditioning system of any of claims 4-6, wherein the plurality of components of the vapor compression cycle are arranged within an indoor unit (250; 1020) and an outdoor unit (200; 1000), the energy storage heat exchanger (1230) being arranged within the indoor unit; or
wherein the plurality of components of the vapor compression cycle are arranged within an indoor unit (250; 1020) and an outdoor unit (200; 1000), the energy storage heat exchanger (1230) being arranged within the outdoor unit.

8. The air conditioning system of any of claims 4-7, further comprising:
a sensor for monitoring a temperature of the energy storage device (240; 1100);
a pump arranged within the coolant loop; and
a controller (220) operably coupled to the sensor and to the pump, wherein the controller is operable to initiate the pump in response to the temperature of the energy storage device.

9. A method of operating an air conditioning system comprising:
determining that a temperature of an energy storage device (240; 1100) is beyond a threshold, the energy storage device being operable to supply power to the air conditioning system (100; 1200); and
managing the temperature of the energy storage device via a heat transfer fluid of the air conditioning system.

10. The method of claim 9, wherein managing the temperature of the energy storage device (240; 1100) via the heat transfer fluid of the air conditioning system (100; 1200) further comprises providing a flow of the heat transfer fluid directly to the energy storage device.

11. The method of claim 9, wherein managing the temperature of the energy storage device (240; 1100) via the heat transfer fluid of the air conditioning system (100; 1200) includes cooling the energy storage device when the temperature of the energy storage device exceeds the threshold.

12. The method of claim 11, wherein managing the temperature of the energy storage device (240; 1100) via the heat transfer fluid of the air conditioning system (100; 1200) further comprises transferring heat from a coolant at an energy storage heat exchanger (1230) of the air conditioning system, the coolant being fluidly coupled to the energy storage device.

13. The method of claim 12, wherein the energy storage heat exchanger (1230) includes a phase change material and the transferring heat from the coolant at the energy storage heat exchanger of the air conditioning system (100; 1200) causes the phase change material to transform from a first phase to a second phase.

14. The method of claim 13, further comprising:
determining that the temperature of the energy storage device (240; 1100) is within the threshold; and
recharging the energy storage heat exchanger (1230) to transform the phase change material from the second phase to the first phase; optionally
wherein recharging the energy storage heat exchanger (1230) includes providing a flow of the heat transfer fluid to the energy storage heat exchanger.

15. The method of claim any of claims 9-14, wherein managing the temperature of the energy storage device (240; 1100) via the heat transfer fluid of the air conditioning system (100; 1200) includes heating the energy storage device when the temperature of the energy storage device is below the threshold; optionally
wherein managing the temperature of the energy storage device (240; 1100) via the heat transfer fluid of the air conditioning system (100; 1200) further comprises transferring heat to a coolant at an energy storage heat exchanger (1230) of the air conditioning system, the coolant being fluidly coupled to the energy storage device.
